# EUROPEAN PATENT SPECIFICATION

(11) **EP 2 899 908 B1**
(45) Date of publication and mention of the grant of the patent: **20.04.2022**
(21) Application number: 13840034.6
(22) Date of filing: 06.09.2013
(51) Int. Cl.: H04L 5/00, H04L 27/26, H04J 11/00, H04W 16/28, H04W 88/02, H04W 88/08

(54) **BASE STATION DEVICE, MOBILE STATION DEVICE, COMMUNICATION METHOD, AND INTEGRATED CIRCUIT**
BASISSTATIONSVORRICHTUNG, MOBILSTATIONSVORRICHTUNG, KOMMUNIKATIONSVERFAHREN UND INTEGRIERTER SCHALTKREIS
DISPOSITIF DE STATION DE BASE, DISPOSITIF DE STATION MOBILE, PROCÉDÉ DE COMMUNICATION, ET CIRCUIT INTÉGRÉ

(30) Priority: 20.09.2012 JP 2012206440
(43) Date of publication of application: 29.07.2015
(73) Proprietor: Sharp Kabushiki Kaisha, Osaka 545-8522 (JP)
(72) Inventor: SHIMEZAWA, Kazuyuki, Osaka-shi Osaka 545-8522 (JP); NOGAMI, Toshizo, Osaka-shi Osaka 545-8522 (JP); IMAMURA, Kimihiko, Osaka-shi Osaka 545-8522 (JP)
(74) Representative: Müller-Boré & Partner Patentanwälte PartG mbB
(86) International application number: PCT/JP2013/074037
(87) International publication number: WO 2014/045899

(56) References cited:
- EP-A2- 2 383 928
- WO-A1-2012/109542
- EDITOR (ERICSSON): "Inclusion of Rel-11 features", 3GPP DRAFT; R1-124010 CR TO 36.211 AFTER RAN1#70, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20120813 - 20120817 19 September 2012 (2012-09-19), XP050661889, Retrieved from the Internet: URL:http://www.3gpp.org/ftp/tsg_ran/WG1_RL 1/TSGR1_70/Docs/ [retrieved on 2012-09-19]
- RENESAS MOBILE EUROPE LTD: "Remaining details on ePDCCH antenna port association", 3GPP DRAFT; R1-123587, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, China; 20120513 - 20120517 5 August 2012 (2012-08-05), XP050661465, Retrieved from the Internet: URL:http://www.3gpp.org/ftp/tsg_ran/WG1_RL 1/TSGR1_70/Docs/ [retrieved on 2012-08-05]
- RENESAS MOBILE EUROPE LTD: 'Remaining details on ePDCCH antenna port association' 3GPP TSG-RAN WG1 MEETING #70 R1-123587 13 August 2012, XP050661465
- HUAWEI: 'ANTENNA PORT ASSOCIATION FOR EPDCCH' 3GPP TSG RAN WG1 MEETING #70 R1-123560 13 August 2012, XP050661438
- INTERDIGITAL COMMUNICATIONS: 'LLC, Antenna port association for ePDCCH transmission' 3GPP TSG- RAN WG1#69 R1-122555 21 May 2012, XP055252002
- SHARP: 'Details of association between DM-RS ports and EPDCCH' 3GPP TSG RAN WG1 MEETING #70BIS R1-124337 08 October 2012, XP050662235
- SHARP: 'Details of association between DM-RS ports and EPDCCH' 3GPP TSG RAN WG1 MEETING #70BIS R1-125143 12 November 2012, XP050663001

## Description

### Technical Field

The present invention relates to a base station apparatus, a mobile station apparatus, and a communication method.

### Background Art

In general, in a wireless communication system such as Wideband Code Division Multiple Access (WCDMA) (registered trademark) by the Third Generation Partnership Project (3GPP), Long Term Evolution (LTE), LTE-Advanced (LTE-A), and Wireless LAN by The Institute of Electrical and Electronics engineers (IEEE), and Worldwide Interoperability for Microwave Access (WiMAX), a base station (a cell, a transmission station, a transmission device, and an eNodeB), and a terminal (a mobile terminal, a reception station, a mobile station, a reception device, and User Equipment (UE)) respectively have a plurality of transmit and receive antennas, and spatially multiplex data signals by using a multi input multi output (MIMO) technology so as to realize high-speed data communication.

In such a wireless communication system, in a case of transmitting downlink data (a transport block for a downlink shared channel (DL-SCH)) to a terminal, the base station multiplexes and transmits demodulation reference signals (DMRS) which are known to the base station and the terminal. Here, the demodulation reference signal is also referred to as a user equipment-specific reference signal (a UE-specific RS or a terminal-specific RS).

For example, before a precoding process is applied, the DMRS is multiplexed with the downlink data. Therefore, the terminal can measure an equalization channel including the applied precoding process and the channel state, by using the DMRS. In other words, the terminal can demodulate the downlink data, even if it is not notified of the precoding process that is applied by the base station.

Here, the downlink data is mapped to a physical downlink shared channel (PDSCH). In other words, the reference signal is used to demodulate the PDSCH. Further, for example, the reference signal is transmitted only in resource blocks (referred to as a physical resource block, or a resource) to which the corresponding PDSCH is mapped.

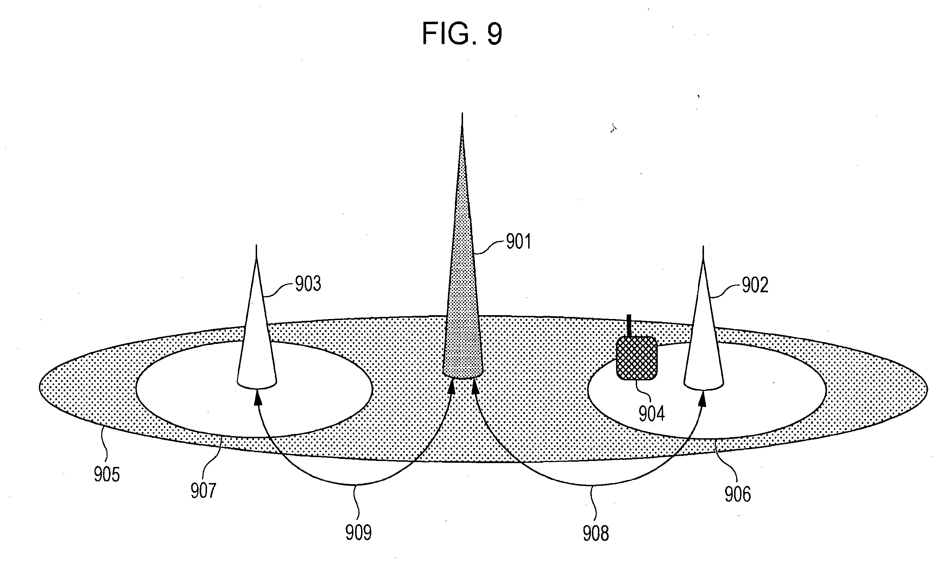

Here, a wireless communication system using heterogeneous network deployment (HetNet) which consists of a macro base station having wide coverage and a remote radio head (RRH) having coverage narrower than that of the macro base station has been developed. Fig. 9 is an outline diagram of a wireless communication system using heterogeneous network deployment. As illustrated in Fig. 9, for example, the heterogeneous network consists of a macro base station 901, an RRH 902, and an RRH 903.

In Fig. 9, the macro base station 901 has coverage 905, and the RRH 902 and the RRH 903 respectively have coverage 906 and coverage 907. Further, the macro base station 901 is connected to the RRH 902 through a line 908, and is connected to the RRH 903 through a line 909. Thus, the macro base station 901 can transmit and receive data signals and control signals (control information) to and from the RRH 902 and the RRH 903. Here, for example, a wired line such as an optical fiber or a wireless line using a relay technology is used for the line 908 and the line 909. In this case, some or all of the macro base station 901, the RRH 902, and RRH 903 use the same resource, thereby allowing overall frequency utilization efficiency (transmission capacity) in an area of the coverage 905 to be improved.

Further, when a terminal 904 is located within the coverage 906, the terminal 904 can perform single-cell communication with the RRH 902. Further, when the terminal 904 is located near the edge of the coverage 906 (cell edge), measures for co-channel interference from the macro base station 901 may be required. Here, a method of reducing or suppressing the interference for the terminal 904 located in the cell edge region by performing inter-base station cooperative communication in which adjacent base stations are cooperative with each other has been studied, as multicell communication between the macro base station 901 and the RRH 902. For example, a cooperative multipoint (CoMP) transmission scheme and the like have been considered as measures for reducing or suppressing the interference caused by the inter-base station cooperative communication (3rd Generation Partnership Project; Technical Specification Group Radio Access Network; Coordinated multi-point operation for LTE physical layer aspects (Release 11), September, 2011, 3GPP TR 36.819 V11.0. 0 (2011-09)).

The document EDITOR (ERICSSON), "Inclusion of Rel-11 features", vol. RAN WG1, no. Qingdao, China; 13 to 17 August 2012, 3GPP DRAFT; R1-124010 CR TO 36.211 AFTER RAN1#70, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE describes the physical channels for evolved UTRA, in particular enhanced physical downlink control channel, EDCCH, formats and mapping to resource elements. An EPDCCH is transmitted using an aggregation of one or several enhanced control channel elements, ECCEs. Each ECCE consists of multiple enhanced resource element groups, EREGs. Each EREG is associated with one out of two antenna ports in an alternating manner.

### Summary of Invention

### Technical Problem

However, in a case of using a general method as a notification method of control information for a terminal from a base station in the heterogeneous network deployment and/or the CoMP transmission scheme, a problem of a capacity of a notification area of the control information occurs. As a result, since it is difficult for the base station to effectively notify the terminal of the control information, it is a cause that prevents the improvement of the transmission efficiency in the communication between the base station and the terminal.

### Solution to Problem

The above and other problems are solved by a base station apparatus, a terminal apparatus, a communication method of a base station apparatus, and a communication method of a terminal apparatus, as defined in claims 1, 4, 7 and 8, respectively. Further preferred embodiments are set forth in the dependent claims.

### Advantageous Effects of Invention

According to the present invention, in a wireless communication system in which a base station and a terminal communicate, the base station can efficiently transmit control information for the terminal.

### Brief Description of Drawings

[Fig. 1] Fig. 1 is a schematic block diagram illustrating a configuration of a base station according to an embodiment of the present invention.
[Fig. 2] Fig. 2 is a schematic block diagram illustrating a configuration of a terminal according to the embodiment of the present invention.
[Fig. 3] Fig. 3 is a diagram illustrating an example of a subframe which is transmitted by the base station.
[Fig. 4] Fig. 4 is a diagram illustrating an example of one resource block pair which is mapped by the base station.
[Fig. 5] Fig. 5 illustrates a structure of an EREG in one RB pair.
[Fig. 6] Fig. 6 is a diagram illustrating a combination of resource elements for EREG numbers in one RB pair.
[Fig. 7] Fig. 7 illustrates an example of association between a resource element used in transmission of an EPDCCH and an antenna port of an EPDCCH demodulation reference signal.
[Fig. 8] Fig. 8 illustrates an example of association between a resource element used in transmission of an EPDCCH and an antenna port of an EPDCCH demodulation reference signal.
[Fig. 9] Fig. 9 is an outline diagram of a wireless communication system using heterogeneous network deployment. Description of Embodiments

The technology described herein may be used in various systems such as in a code division multiple access (CDMA) system, a time division multiple access (TDMA) system, a frequency division multiple access (FDMA) system, an orthogonal FDMA (OFDMA) system, a single carrier FDMA (SC-FDMA) system, interleave division multiple access (IDMA), and other systems. The terms "system" and "network" may often be used synonymously. The third generation partnership project (3GPP) standardizes communication systems referred to as a long term evolution (LTE) and LTE-Advanced (LTE-A). LTE is UMTS employing E-UTRA employing OFDMA and SC-FDMA in a downlink and uplink, respectively. LTE-A is a system, a wireless technology, and a standard of improved LTE. A description will be made regarding the case where the technology described below is used in LTE and/or LTE-A, but the technology can also be applied to other communication systems. In the following description, the terms used in the LTE standard, the terms used in the LTE-A standard, and the terms used in the 3GPP are used.

### First embodiment according to the invention

Hereinafter, an embodiment of the present invention will be described. A communication system in the present embodiment includes a base station and a terminal. Here, the base station may be a transmission device, a cell, a transmitting point, a transmission antenna group, a transmission antenna port group, a component carrier, or an eNodeB. In addition, the base station includes a macro cell, a pico cell, a femto cell, a small cell, a remote radio head (RRH), a distributed antenna, and the like. The terminal may be a terminal device, a mobile terminal, a receiving point, a reception terminal, a reception device, a reception antenna group, a reception antenna port group, or user equipment (UE). Further, the terminal can identify a base station (transmitting point), based on a parameter specific to a cell, or a parameter specific to the terminal. For example, the terminal can identify the base station (transmitting point), based on a cell ID that is an identifier specific to a cell, a parameter (such as a virtual cell ID) that is set for the terminal through signaling of a higher layer, or the like.

In the communication system, since a base station 100 and a terminal 200 perform data communication, they transmit and/or receive control information and/or data through a downlink and/or an uplink. The base station 100 transmits a physical downlink control channel (PDCCH, a first control channel), an enhanced PDCCH (EPDCCH, enhanced physical downlink control channel EPDCCH, a second control channel), and/or a physical downlink shared channel (PDSCH) to the terminal 200, through the downlink. The control information is transmitted through the PDCCH and/or the EPDCCH. The data is transmitted through the PDSCH. Further, the control information (RRC signaling) of the higher layer is transmitted through the PDSCH. In other words, data is configured to include the control information of the higher layer. Meanwhile, the terminal 200 transmits a physical uplink control channel (PUCCH) and/or a physical uplink shared channel (PUSCH) to the base station 100, through the uplink. The control information is transmitted through the PUCCH and/or PUSCH. The data is transmitted through the PUSCH. Here, the PDCCH, the EPDCCH, the PDSCH, the PUCCH, and the PUSCH are a type of physical channel, and channels defined on a physical frame. In addition, the following description will be given regarding the case where the base station 100 and the terminal 200 perform data communication, but there may be plural base stations and/or terminals.

### Configuration of transceiver

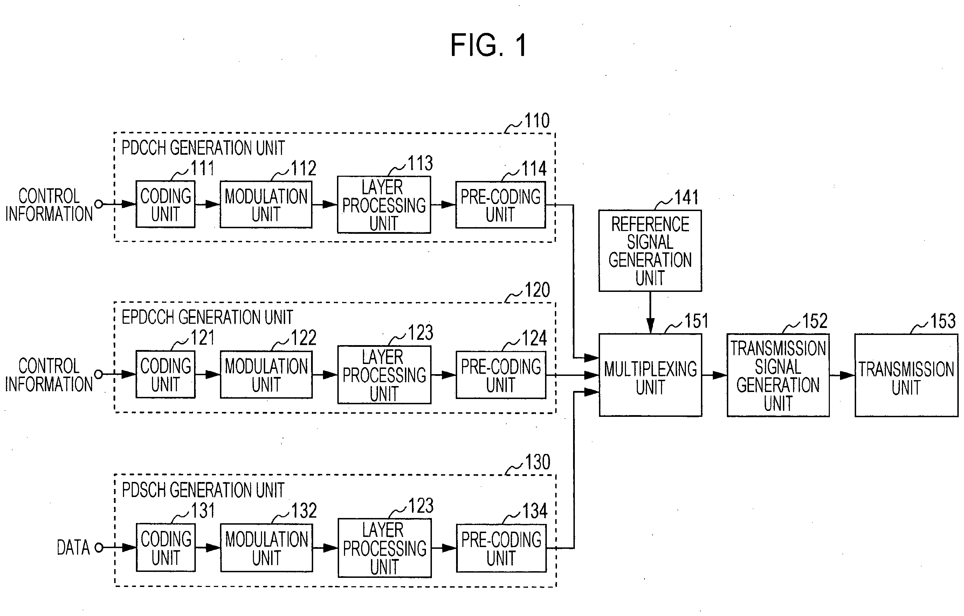

Fig. 1 is a schematic block diagram illustrating a configuration of a base station according to an embodiment of the present invention. In Fig. 1, the base station 100 is configured to include a PDCCH generation unit 110, an EPDCCH generation unit 120, a PDSCH 130, a reference signal generation unit 141, a multiplexing unit 151, a transmission signal generation unit 152, and a transmission unit 153. The EPDCCH generation unit 110 is configured to include a coding unit 111, a modulation unit 112, a layer processing unit 113, and a pre-coding unit 114. The EPDCCH generation unit 120 is configured to include a coding unit 121, a modulation unit 122, a layer processing unit 123, and a precoding unit 124. The PDSCH generation unit 130 is configured to include a coding unit 131, a modulation unit 132, a layer processing unit 133, and a pre-coding unit 134. In addition, without being illustrated, the base station 100 is configured to include a control unit, and the control unit can control various processes of the base station 100.

Control information (downlink control information (DCI)) for the terminal 200 is input to the EPDCCH generation unit 110 and/or the EPDCCH generation unit 120. Further, data (transport block, code word) for the terminal 200 is input to the PDSCH generation unit 130. Here, the data may be a unit of error correction coding. Further, the data may be a unit of retransmission control such as a hybrid automatic repeat request (HARQ). Further, the base station 100 can transmit a plurality of pieces of control information and/or data to the terminal 200.

The EPDCCH generation unit 110 generates the PDCCH from the input control information. The coding unit 111 performs error detection coding using a cyclic redundancy check (CRC), error correction coding using error correction codes such as convolution codes, and scramble coding using a pseudo noise sequence, on the input control information. Further, the coding unit 111 performs scrambling on a parity bit of the CRC (redundant bit), by using an identifier specific to the terminal 200 (UE-ID, radio network temporary ID (RNTI)). Further, the coding unit 111 is capable of controlling the coding rate by using a predetermined method. The modulation unit 112 performs modulation on a signal generated by the coding unit 111 by using a modulation scheme such as a quadrature phase shift keying (QPSK). The layer processing unit 113 performs a layer process such as layer mapping on a signal generated by the modulation unit 112. In the layer mapping by the layer processing unit 113, an input signal is mapped (allocated) to each of one or more layers. The precoding unit 114 generates a signal for each antenna port, by performing a pre-coding process on a signal generated by the layer processing unit 113, by using a predetermined method. For example, the pre-coding unit 114 performs a pre-coding process in which a frequency diversity effect is achieved. In the EPDCCH generation unit 110, the number of layers of the PDCCH and the number of antenna ports may be the same. The PDCCH can be transmitted by using some or all of antenna ports 0 to 3.

The EPDCCH generation unit 120 generates the EPDCCH from the input control information. The coding unit 121 performs error detection coding using a cyclic redundancy check (CRC), error correction coding using error correction codes such as convolution codes, and scramble coding using a pseudo noise sequence, on the input control information. Further, the coding unit 121 performs scrambling on a parity bit of the CRC by using an identifier specific to the terminal 200. Further, the coding unit 121 is capable of controlling the coding rate by using a predetermined method. The modulation unit 122 performs modulation on a signal generated by the coding unit 121, by using a modulation scheme such as QPSK. The layer processing unit 123 performs a layer process such as layer mapping on a signal generated by the modulation unit 122. In the layer mapping by the layer processing unit 123, an input signal is mapped (allocated) to each of one or more layers. The pre-coding unit 124 generates a signal for each antenna port, by performing a pre-coding process on a signal generated by the layer processing unit 123, by using a predetermined method. For example, the pre-coding unit 124 performs a pre-coding process in which a frequency diversity effect and/or a frequency scheduling effect are achieved. In the EPDCCH generation unit 120, a signal for each layer of the EPDCCH and a signal for each antenna port may be the same. The EPDCCH can be transmitted by using some or all of antenna ports 107 to 110. Further, the EPDCCH generation unit 120 can map the EPDCCH generated by the pre-coding unit 124 to a predetermined resource element.

The PDSCH generation unit 130 generates the PDSCH from the input data. In addition, data is input from a higher layer or the like. The coding unit 131 performs scramble coding using a pseudo noise sequence, and error correction coding using error correction codes such as turbo codes, on the input data. Further, the coding unit 131 can control a coding rate by using a predetermined method. The modulation unit 132 performs modulation on a signal generated by the coding unit 131, by using a modulation scheme such as QPSK or quadrature amplitude modulation (QAM). The layer processing unit 133 performs a layer process such as layer mapping on a signal generated by the modulation unit 132. In the layer mapping by the layer processing unit 133, an input signal is mapped (allocated) to each of one or more layers. The number of layers for the PDSCH is determined by the number of MIMO multiplexing (the number of ranks) for the terminal 200. The pre-coding unit 134 generates a signal for each antenna port, by performing a pre-coding process on a signal generated by the layer processing unit 133, by using a predetermined method. For example, the precoding unit 134 performs a pre-coding process in which a frequency scheduling effect is achieved. In the PDSCH generation unit 130, a signal for each layer of the PDSCH and a signal for each antenna port may be the same. The PDSCH can be transmitted by using some or all of antenna ports 7 to 14.

The reference signal generation unit 141 generates reference signals which are signals (sequences) known to each of the base station 100 and the terminal 200. The reference signals may be associated with respective antenna ports. The reference signal include a cell-specific reference signal (CRS), a terminal-specific reference signal (UERS; UE-specific RS), an EPDCCH demodulation reference signal (DM-RS), and a channel state information reference signal (CSI-RS). The cell-specific reference signal is associated with the antenna ports 0 to 3, and can be used in order for the terminal 200 to demodulate the PDCCH and signals specific to a cell. The terminal-specific reference signal is associated with the antenna ports 7 to 14, and can be used in order for the terminal 200 to demodulate the PDSCH. The EPDCCH demodulation reference signal is associated with the antenna ports 107 to 110, and can be used in order for the terminal 200 to demodulate the EPDCCH. The channel state information reference signal is associated with the antenna ports 15 to 22, and can be used in order for the terminal 200 to measure a channel state of a downlink transmitted to the base station 100.

Here, the antenna port means a logical antenna used in signal processing, and one antenna port may be constituted by a plurality of physical antennas. The plurality of physical antennas constituting the same antenna port transmit the same signal. In the same antenna port, delay diversity or cyclic delay diversity (CCD) can be applied to a plurality of physical antennas.

The reference signal generation unit 141 performs a pre-coding process on the respective reference signals by using a predetermined method, and generates signals for respective antenna ports. Here, the reference signals of the respective antenna ports are subjected to the same pre-coding processes as the channels associated with the antenna ports. In other words, the cell-specific reference signal is subjected to the same pre-coding process as that of the pre-coding unit 114. The EPDCCH demodulation reference signal is subjected to the same pre-coding process as that of the pre-coding unit 124. The terminal-specific reference signal is subjected to the same pre-coding process as that of the pre-coding unit 134. In addition, the channel state information reference signal may not be subjected to the pre-coding process.

Here, various methods can be used for the pre-coding process. The pre-coding process having a frequency diversity effect can be performed by using space frequency block coding (SFBC), space time block coding (STBC), frequency switched transmit diversity (FSTD) and/or cyclic delay diversity (CDD). The pre-coding process having a frequency scheduling effect can be performed by multiplication by a predetermined pre-coding matrix. In addition, it is preferable that the pre-coding process having the frequency scheduling effect performs phase rotation and/or amplitude control, in consideration of a channel state in order for the terminal 200 to efficiently perform reception.

The multiplexing unit 151 multiplexes the PDCCH generated by the EPDCCH generation unit 110, the EPDCCH generated by the EPDCCH generation unit 120, the PDSCH generated by the PDSCH generation unit 130, and/or the reference signal generated by the reference signal generation unit 141, and maps the generated channels and signals to resource elements. Here, the resource element is a minimum unit for mapping a signal constituted by one OFDM symbol and one subcarrier. Further, the signals and/or channels multiplexed by the multiplexing unit 151 are mapped to respective different resource elements and/or antenna ports so as to be able to be orthogonal or quasi-orthogonal to each other.

In addition, the EPDCCH generation unit 110, the EPDCCH generation unit 120, the PDSCH generation unit 130, and the reference signal generation unit 141 may be configured so as to map the PDCCH, the EPDCCH, the PDSCH, and the reference signal to respective predetermined resource elements, and the multiplexing unit 151 may be configured so as to multiplex them.

The transmission signal generation unit 152 generates a transmission signal from the signal multiplexed by the multiplexing unit 151. The transmission signal generation unit 152 frequency-time converts the signal multiplexed by the multiplexing unit 151 through inverse fast Fourier transform (IFFT), and adds a cyclic prefix (guard interval) of a predetermined cyclic prefix length. The transmission signal generation unit 152 generates a transmission signal by further performing digital-analog conversion, frequency conversion to a wireless frequency band, and the like. The transmission unit (transmission antenna) 153 transmits the transmission signal generated by the transmission signal generation unit 152, from one or a plurality of antenna ports (transmission antenna ports).

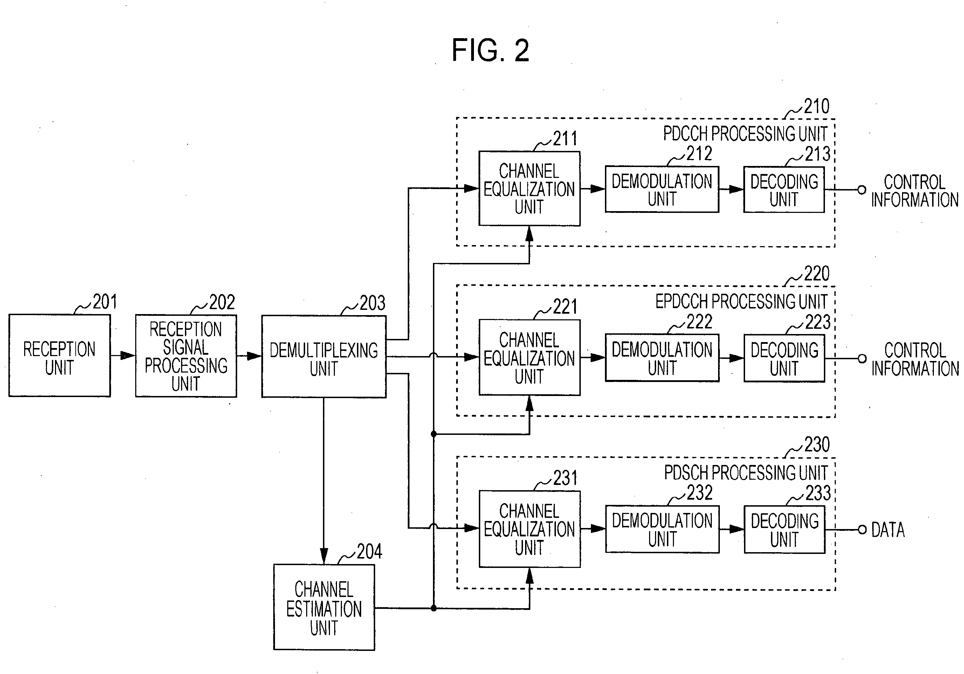

Fig. 2 is a schematic block diagram illustrating a configuration of a terminal according to the embodiment of the present invention. In Fig. 2, the terminal 200 is configured to include a reception unit 201, a reception signal processing unit 202, a demultiplexing unit 203, a channel estimation unit 204, a PDCCH processing unit 210, an EPDCCH processing unit 220, and a PDSCH processing unit 230. The PDCCH processing unit 210 is configured to include a channel equalization unit 211, a demodulation unit 212, and a decoding unit 213. The EPDCCH processing unit 220 is configured to include a channel equalization unit 221, a demodulation unit 222, and a decoding unit 223. The PDSCH processing unit 230 is configured to include a channel equalization unit 231, a demodulation unit 232, and a decoding unit 233. In addition, without being illustrated, the terminal 200 is configured to include a control unit, and the control unit can control various processes of the terminal 200.

The reception unit (reception antenna) 201 receives signals transmitted from the base station 100, by one or a plurality of reception antenna ports. The reception signal processing unit 202 performs frequency conversion from a wireless frequency to a baseband signal, analog-digital conversion, removal of the added cyclic prefix, and timefrequency conversion by fast Fourier transform and the like, on the signals received by the reception unit 201.

The demultiplexing unit 203 demultiplexes (demaps) the signal that is multiplexed (mapped) by the multiplexing unit 151 of the base station 100. Specifically, the demultiplexing unit 203 demultiplexes the PDCCH, the EPDCCH, the PDSCH, and/or the reference signal by a predetermined method. The PDCCH is input to the PDCCH processing unit 210. The EPDCCH is input to the EPDCCH processing unit 220. The PDSCH is input to the PDSCH processing unit 230. The reference signal is input to the channel estimation unit 204. For example, when the resource is pre-defined to which a channel or a signal can be mapped, the demultiplexing unit 203 may demultiplex the channel, the signal, or candidates for the channel or the signal, from the defined resources. Further, for example, when the resource to which a channel or a signal can be mapped is transmitted and configured, the demultiplexing unit 203 may demultiplex the channel, the signal, or candidates for the channel or the signal, from the configured resources. In addition, when information indicating the resource to which the PDSCH is mapped is included in control information which is transmitted through the PDCCH and/or the EPDCCH, the terminal 200 detects the control information, and thereafter, the demultiplexing unit 203 may demultiplex the PDSCH based on the control information.

The channel estimation unit 204 performs channel estimation on the PDCCH, the EPDCCH, and/or the PDSCH, by using the reference signals. The channel estimation for the PDCCH is performed by using the cell-specific reference signal. The channel estimation for the EPDCCH is performed by using the EPDCCH demodulation reference signal. The channel estimation for the PDSCH is performed by using the terminal-specific reference signal. The channel estimation unit 204 obtains channel estimation values, by estimating the variations (frequency response, a transfer function) in the amplitude and the phase of each resource element, for each reception antenna port of each transmission antenna port, by using the reference signal. The channel estimation unit 204 outputs the channel estimation value, to the PDCCH processing unit 210, the EPDCCH processing unit 220, and/or the PDSCH processing unit 230.

The PDCCH processing unit 210 searches PDCCH candidates addressed to the terminal 200 from the PDCCH region, detects a PDCCH addressed to the terminal 200, and identifies control information addressed to the terminal 200. The channel equalization unit 211 performs channel equalization (channel compensation) for the PDCCH candidates, by using the PDCCH candidates which are input from the demultiplexing unit 203 and the channel estimation values which are input from the channel estimation unit 204. The demodulation unit 212 performs demodulation for a predetermined modulation scheme, on a signal subjected to channel equalization by the channel equalization unit 211. The decoding unit 213 performs scramble decoding for predetermined scramble coding using a pseudo noise sequence, error correction decoding for predetermined error correction coding, and error detection decoding for predetermined error detection coding, on signals that are demodulated by the decoding unit 212. Here, a CRC parity bit obtained by the error correction decoding is subjected to scramble decoding by using an identifier specific to the terminal 200, and the error detection decoding. Therefore, if an error is not detected in the PDCCH by the error detection decoding, the PDCCH processing unit 210 can detect the PDCCH as the PDCCH addressed to the terminal 200. The PDCCH processing unit 210 identifies control information from the detected PDCCH. The control information is used for various controls of the terminal 200. Further, the PDCCH processing unit 210 performs process on all of the PDCCH candidates.

The EPDCCH processing unit 220 searches EPDCCH candidates addressed to the terminal 200 from the EPDCCH region (EPDCCH set), detects an EPDCCH addressed to the terminal 200, and identifies control information addressed to the terminal 200. The channel equalization unit 221 performs channel equalization (channel compensation) for the EPDCCH candidates, by using the EPDCCH candidates which are input from the demultiplexing unit 203 and the channel estimation values which are input from the channel estimation unit 204. The demodulation unit 222 performs demodulation for a predetermined modulation scheme, on a signal subjected to channel equalization by the channel equalization unit 221. The decoding unit 223 performs scramble decoding for predetermined scramble coding using a pseudo noise sequence, error correction decoding for predetermined error correction coding, and error detection decoding for predetermined error detection coding, on signals that are demodulated by the decoding unit 222. Here, a CRC parity bit obtained by the error correction decoding is subjected to the scramble decoding by using an identifier specific to the terminal 200, and the error detection decoding. Therefore, if an error is not detected in the EPDCCH by the error detection decoding, the EPDCCH processing unit 220 can detect the EPDCCH as the EPDCCH addressed to the terminal 200. The EPDCCH processing unit 220 identifies control information from the detected EPDCCH. The control information is used for various controls of the terminal 200. Further, the EPDCCH processing unit 220 performs process on all of the EPDCCH candidates.

### Control information

The PDSCH processing unit 230 processes the PDSCH addressed to the terminal 200 so as to detect the data addressed to the terminal 200. The process performed by the PDSCH processing unit 230 may be performed based on control information detected in the same or the previous subframe. Further, the process performed by the PDSCH processing unit 230 may be performed based on pre-defined control information. Further, the process performed by the PDSCH processing unit 230 may be performed based on the control information notified through a higher layer. The channel equalization unit 231 performs channel equalization (channel compensation) for the PDSCH, by using the PDSCH which is input from the demultiplexing unit 203 and channel estimation value which is input from the channel estimation unit 204. The demodulation unit 232 performs demodulation for a predetermined modulation scheme, on the signal of which the channel is equalized by the channel equalization unit 231. The decoding unit 233 performs scramble decoding for a predetermined scramble coding using a pseudo noise sequence, and error correction decoding for a predetermined error correction coding, on the signal demodulated by the decoding unit 232. The PDSCH processing unit 230 detects data from the processed PDSCH, and outputs the data to the higher layer or the like. Further, the PDSCH processing unit 230 can perform a process for a plurality of PDSCHs.

Here, the configuration of the EPDCCH region is performed through control information (for example, radio resource control (RRC) signaling) of a higher layer which is transmitted to the terminal 200, by the base station 100. For example, the configuration of the EPDCCH region is control information for configuring the EPDCCH and the configuration information specific to the terminal 200, as the terminal-specific configuration information of the EPDCCH. The details of the configuration of the EPDCCH will be described later. In addition, in the following description, the PDCCH and the EPDCCH are simply referred to as control channels.

For example, when the terminal-specific configuration information of the EPDCCH is transmitted by the base station 100, and an EPDCCH region is configured, the EPDCCH processing unit 220 searches for the control channel addressed to the terminal 200 which is mapped to the EPDCCH region. In this case, the PDCCH processing unit 210 may further search for the PDCCH in the PDCCH region. For example, the PDCCH processing unit 210 may further search the cell-specific search space in the PDCCH region. Further, when the terminal-specific configuration information of the EPDCCH is not transmitted by the base station 100 and the EPDCCH region is not configured, the PDCCH processing unit 210 searches for the PDCCH addressed to the terminal 200 which is mapped to the PDCCH region.

Here, when searching for the EPDCCH addressed to the terminal 200 which is mapped to the EPDCCH region, the EPDCCH processing unit 220 uses a terminal-specific reference signal in order to demodulate an available EPDCCH. Further, when searching for the PDCCH addressed to the terminal 200 which is mapped to the PDCCH region, the PDCCH processing unit 210 uses a cell-specific reference signal in order to demodulate an available PDCCH.

Specifically, the PDCCH processing unit 210 and/or the EPDCCH processing unit 220 performs sequential searching by performing demodulation and decoding processes on some or all of candidates for a control channel which are obtained based on a type of control information (DCI; downlink control information), a position of a resource to be mapped, a size of a resource to be mapped, and the like. The PDCCH processing unit 210 and the EPDCCH processing unit 220 use an error detection code (for example, cyclic redundancy check (CRC)) code) which is added to the control information, as a method of determining whether or not the control channel is control information addressed to the terminal 200. Further, such a search method is also referred to as blind decoding.

Further, when the control channel addressed to the terminal 200 is detected, the PDCCH processing unit 210 and/or the EPDCCH processing unit 220 identifies control information which is mapped to the detected control channel. The control information is shared in the entire terminal 200 (including a higher layer), and used in various controls of the terminal 200 such as a reception process of a downlink data channel (PDSCH), a transmission process of an uplink data channel (PUSCH) and an uplink control channel (PUCCH), and a transmission power control in the uplink.

When control information containing allocation information of the downlink data channel is not mapped to the detected control channel, the PDCCH processing unit 210 and/or the EPDCCH processing unit 220 demultiplexes the data channel by the demultiplexing unit 203 and outputs the data channel to the PDSCH processing unit 230.

Here, the PDCCH or the EPDCCH is used to transmit (designate) the downlink control information (DCI) to the terminal. For example, the downlink control information includes information regarding resource allocation of the PDSCH, information regarding a modulation and coding scheme (MCS), information regarding a scrambling identity (also referred to as a scramble link identifier), information regarding a reference signal sequence identity (also referred to as a base sequence identity, a base sequence identifier, or a base sequence index).

Further, a plurality of formats are defined for the downlink control information which is transmitted in the PDCCH or the EPDCCH. Here, a format of the downlink control information is referred to as a DCI format. In other words, fields for respective pieces of uplink control information are defined in the DCI format.

For example, as the DCI format for the downlink, a DCI format 1 and a DCI format 1A are defined which are used in scheduling of one PDSCH (a code word of one PDSCH, transmission of one downlink transport block) in one cell. In other words, the DCI format 1 and the DCI format 1A are used in transmission in the PDSCH using one transmission antenna port. Further, the DCI format 1 and the DCI format 1A are also used in transmission in the PDSCH by transmission diversity (TxD) using a plurality of transmission antenna ports.

Further, as the DCI format for the downlink, a DCI format 2, a DCI format 2A, a DCI format 2B and a DCI format 2C are defined which are used in scheduling of one PDSCH (code words of even two PDSCHs, transmission of even two downlink transports) in one cell (transmitting point). In other words, the DCI format 2, the DCI format 2A, the DCI format 2B and the DCI format 2C are used in transmission of the PDSCH using MIMO by a plurality of transmission antenna ports, from one cell (transmitting point). Further, as the DCI format for the downlink, a DCI format 2D is defined which is used in scheduling of one PDSCH (code words of even two PDSCHs, transmission of even two downlink transports) in one or a plurality of cells (transmitting points). In other words, the DCI format 2D is used in transmission of the PDSCH using MIMO by a plurality of transmission antenna ports, from one or a plurality of cells (transmitting points).

Here, the format of the control information is defined in advance. For example, the control information can be defined according to an object which is transmitted to the terminal 200 by the base station 100. Specifically, the control information can be defined with respect to the allocation information of the downlink data channel for the terminal 200, the uplink data channel (PUSCH) for the terminal 200, the allocation information of the uplink control channel (PUCCH), and/or information for controlling transmission power for the terminal 200. Therefore, for example, when transmitting the PDSCH to the terminal 200, the base station 100 transmits the control channel to which the control information including the allocation information of the PDSCH for the terminal 200 is mapped, and the PDSCH allocated based on the control information. Further, for example, when allocating a PUSCH for the terminal 200, the base station 100 transmits the PUSCH to which the control information including the allocation information of the PUSCH for the terminal 200 is mapped. Further, the base station 100 can transmit a plurality of pieces of different control information or the same control information to the same terminal 200, in the same subframe, in different formats or the same format. In addition, when transmitting downlink data to the terminal 200, the base station 100 can transmit the downlink data channel in a subframe different from the subframe for transmitting the control channel to which the control information including the allocation information of the PDSCH for the terminal 200 is mapped.

Here, since the PDCCH region is a region specific to the base station 100, it is also referred to as a cell-specific control channel region. Further, since the EPDCCH region is a region specific to the terminal 200 which is configured through an RRC signaling from the base station 100, it is also referred to as a terminal-specific control channel region. Further, the EPDCCH region is configured, with a resource block pair or a resource block group which is a group of a plurality of resource block pairs as a unit. In addition, the EPDCCH region can be configured as a region specific to the base station 100. In other words, the EPDCCH region is used as a region common to some or all terminals communicating with the base station 100.

Further, the base station 100 and terminal 200 transmit and receive signals in a higher layer. For example, the base station 100 and the terminal 200 transmit and receive a radio resource control signal (also referred to as RRC signaling, a radio resource control message (RRC message), or radio resource control information (RRC information)), in the RRC layer (layer 3). Here, a dedicated signal to be transmitted to a certain terminal by the base station 100 in the RRC layer is also referred to as a dedicated signal. In other words, the configuration (information) transmitted by using the dedicated signal by the base station 100 is a configuration specific to a certain terminal.

Further, the base station 100 and the terminal 200 transmit and receive a MAC control element, in a medium access control (MAC) layer (layer 2). Here, the RRC signaling and/or the MAC control element are also referred to as a higher layer signaling.

### Frame format

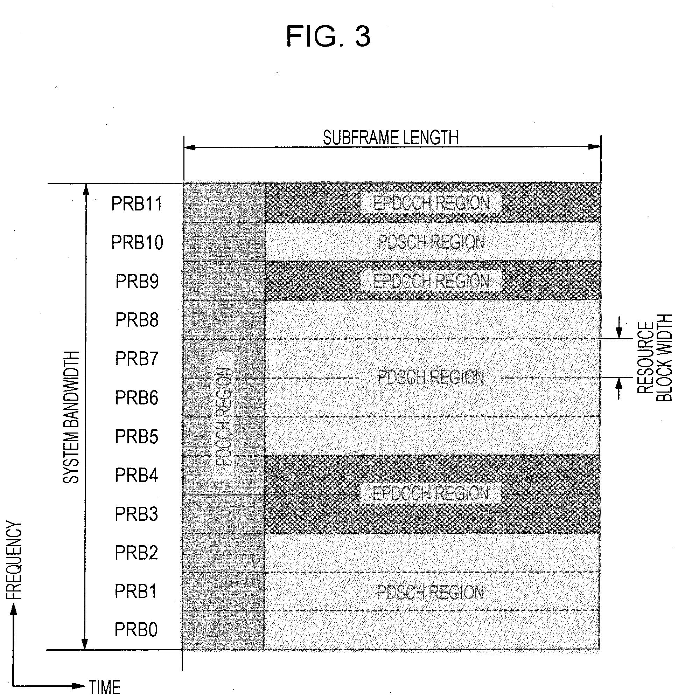

Fig. 3 is a diagram illustrating an example of a subframe which is transmitted by the base station 100. In this example, one subframe of a system bandwidth constituted by 12 physical resource block (PRB) pairs is illustrated. In addition, in the following description, the resource block pair is simply described as a resource block, a PRB, or a RB. In other words, in the following description, the resource block, the PRB or the RB includes resource block pairs. Further, in the subframe, first zero or more OFDM symbols are the PDCCH region. The terminal 200 is notified of the number of OFDM symbols of the PDCCH region. For example, a notification region dedicated for the first OFDM symbol is configured in the PDCCH region, and can be dynamically notified for each subframe. Further, it is possible to transmit the PDCCH region by using the control information of the higher layer, in a semi-static manner. Further, regions other than the PDCCH region are shared channel regions. The shared channel regions are configured to include a data channel region and/or an EPDCCH region. In the example of Fig. 3, a PRB 3, a PRB 4, a PRB 9, and a PRB 11 are EPDCCH regions.

Here, the base station 100 notifies (configures) the terminal 200 of the EPDCCH region, through the control information of the higher layer. For example, the control information for configuring the EPDCCH region is control information configuring the EPDCCH region in each PRB pair or each PRB pair group. In the example of Fig. 3, the PRB 3, the PRB 4, the PRB9, and the PRB 11 are configured as the EPDCCH regions. Further, the EPDCCH region is allocated in units of a predetermined number of PRBs. For example, the predetermined number of PRBs may be four. In this case, the base station 100 configures the PRBs in multiples of 4 as the EPDCCH region, in the terminal 200.

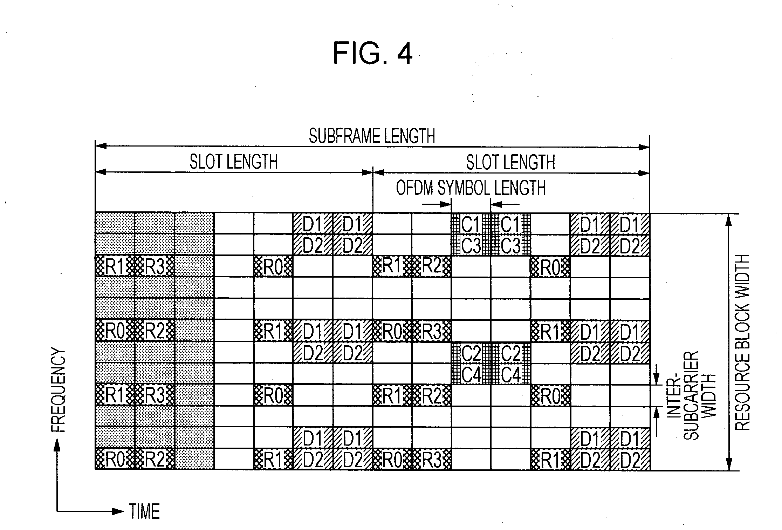

Fig. 4 is a diagram illustrating an example of one resource block pair which is mapped by the base station. One resource block consists of a predetermined region in the frequency direction and a predetermined region in the time direction. One resource block pair includes two resource blocks which are continuously located in the time direction. Further, in the resource block pair, the resource block of the first half in the time direction is referred to as a first resource block, and the resource block of the second half in the time direction is referred to as a second resource block. Fig. 4 represents one resource block pair, and one resource block consists of 12 subcarriers in the frequency direction and 7 OFDM symbol in the time direction. The resource constituted by one OFDM symbol and one subcarrier is referred to as a resource element. The resource block pairs are arranged in the frequency direction, and the number of the resource block pairs can be set for each base station. For example, the number of the resource block pairs may be set to 6 to 110. In this case, the width in the frequency direction is referred to as the system bandwidth. Further, the resource block pair in the time direction is referred to as a subframe. Among respective subframes, the preceding and subsequent seven continuous OFDM symbols in the time direction are respectively referred to as slots. Further, in the following description, the resource block pair is also simply referred to as a resource block. Further, in the resource block pair, the resource block of the first half in the time direction is referred to as a first resource block, and the resource block of the second half in the time direction is referred to as a second resource block.

In Fig. 4, among the shaded resource elements, R0 to R3 respectively represent cell-specific reference signals of the antenna ports 0 to 3. Hereinafter, the cell-specific reference signals of the antenna ports 0 to 3 are referred to as common reference signals (CRS). Here, the CRSs illustrated in Fig. 4 are for the case of having four antenna ports, but the number may be changed, for example, it is possible to map the CRSs of one antenna port or two antenna ports. Further, the cell-specific reference signal may be shifted in the frequency direction, based on the cell ID. For example, the cell-specific reference signal may be shifted in the frequency direction, based on the remainder obtained by dividing the cell ID by 6. The shift pattern at this time is 6. In other words, when the number of antenna ports of the cell-specific reference signal is 1, the pattern of the resource elements used in the cell-specific reference signal is 6. When the number of antenna ports of the cell-specific reference signal is 2 and 4, the pattern of the resource elements used in the cell-specific reference signal is 3.

Here, if the cell-specific reference signal is a signal known to both the base station 100 and the terminal 200, any signal (sequence) may be used. For example, it is possible to use a random number or a pseudo-noise sequence based on a pre-assigned parameter such as a number specific to the base station 100 (cell ID). Further, it is possible to use a method of causing the resource elements for mapping the cell-specific reference signals to be null (zero) between antenna ports, a code division multiplexing method using a pseudo-noise sequence, or a method of combining these, as a method of causing the cell-specific reference signals to be orthogonal between antenna ports. In addition, the cell-specific reference signal may be multiplexed to all subframes, or only to some subframes.

In Fig. 4, it is possible to map the channel state information reference signals of the antenna ports 15 to 22, as cell-specific reference signals different from the cell-specific reference signals of the antenna ports 0 to 3. In Fig. 4, among the shaded resource elements, C1 to C4 respectively represent channel state information reference signals of a code division multiplexing (CDM) group 1 to a CDM group 4. Orthogonal codes using a Walsh code are first mapped to the channel state information reference signal and thereafter the scrambling codes using a Gold code or the pseudo-noise sequence are superimposed on the channel state information reference signal. Further, the channel state information reference signals are respectively code division multiplexed by orthogonal codes such as Walsh codes in the CDM group. Further, the channel state information reference signals are frequency division multiplexed (FDM) with each other, between the CDM groups. Further, the channel state information reference signals of the antenna ports 15 and 16 are mapped to C1, the channel state information reference signals of the antenna ports 17 and 18 are mapped to C2, the channel state information reference signals of the antenna ports 19 and 20 are mapped to C3, and the channel state information reference signals of the antenna ports 21 and 22 are mapped to C4. Further, the channel state information reference signals can be configured as the reference signals corresponding to eight antenna ports 15 to 22. Further, the channel state information reference signals can be configured as the reference signals corresponding to four antenna ports 15 to 18. Further, the channel state information reference signals can be configured as the reference signals corresponding to two antenna ports 15 and 16. Further, the channel state information reference signal can be configured as the reference signal corresponding to one antenna port 15. Further, the channel state information reference signals can be mapped to some subframes, for example, a plurality of respective subframes. Further, the resource elements to which the channel state information reference signals are mapped may be different from the resource elements illustrated in Fig. 4. Further, a plurality of patterns may be pre-defined for the mapping patterns for the resource elements of the channel state information reference signals. Further, the base station 100 can configure a plurality of channel state information reference signals for the terminal 200. Further, transmission power can be set for the channel state information reference signal and, for example, the transmission power may be zero. The base station 100 configures the channel state information reference signal as the terminal-specific control information for the terminal 200, through the RRC signaling. The terminal 200 generates feedback information, by using the CRS and/or the channel state information reference signal based on the configuration from the base station 100.

In Fig. 4, among shaded resource elements, D1 to D2 respectively represent terminal-specific reference signals or EPDCCH demodulation reference signals of the code division multiplexing (CDM) group 1 and the CDM group 2. Orthogonal codes using a Walsh code are first mapped to the terminal-specific reference signals or the EPDCCH demodulation reference signals and thereafter the pseudo-noise sequence using a Gold code are superimposed as the scrambling sequence on the channel state information reference signal. Further, the terminal-specific reference signals or the EPDCCH demodulation reference signals are respectively code division multiplexed by orthogonal codes such as Walsh codes in the CDM group. Further, the terminal-specific reference signals or the EPDCCH demodulation reference signals are subjected to FDM with each other, between CDM groups. Here, the terminal-specific reference signals or the EPDCCH demodulation reference signals may be mapped up to eight ranks, in response to the control channels and the data channels which are mapped to the resource block pairs, by using some or all of eight antenna ports (antenna ports 7 to 14). Further, with respect to the terminal-specific reference signals or the EPDCCH demodulation reference signals, the spreading code length of CDM and the number of resource elements to be mapped can be varied, depending on the number of ranks to be mapped.

The terminal-specific reference signals of antenna ports 7, 8, 11, and 13 are constituted by a sequence length of four chips, and mapped to a CDM group 1. The terminal-specific reference signals of antenna ports 9, 10, 12, and 14 are constituted by a sequence length of four chips, and mapped to a CDM group 2. Further, the EPDCCH demodulation reference signals of antenna ports 107 and 108 are constituted by a sequence length of four chips, and mapped to the CDM group 1. The EPDCCH demodulation reference signals of antenna ports 109 and 110 are constituted by a sequence length of four chips, and mapped to the CDM group 2.

Further, the EPDCCH demodulation reference signals of the antenna ports 107 to 110 may be configured to be different from the terminal-specific reference signals of the antenna ports 7 to 14 in some parts. For example, the scrambling sequence used in the EPDCCH demodulation reference signals of the antenna ports 107 to 110 may be different from the scrambling sequence used in the terminal-specific reference signals of the antenna ports 7 to 14.

Further, white resource elements are regions in which the PDSCH and/or the EPDCCHs are disposed. A PDSCH region and/or an EPDCCH region are mapped to OFDM symbols different from the OFDM symbols of the PDCCH regions in the subframe. In the example of Fig. 4, the number of OFDM symbols of the PDCCH region is 3, and the PDCCH region consists of the OFDM symbol at the beginning to the third OFDM symbol in the subframe. Further, the PDSCH region and/or the EPDCCH region are constituted by the fourth OFDM symbol to the last OFDM symbol in the subframe, and the number of OFDM symbols in the PDSCH region and/or the EPDCCH region is 11. It is possible to configure the PDCCH region, the PDSCH region, and/or the EPDCCH region by configuring a predetermined number of OFDM symbols for each subframe. In addition, all or some of the PDSCH region and/or the EPDCCH region can also be mapped to predetermined OFDM symbols which are pre-defined, regardless of the PDCCH regions in the subframe. Further, the PDSCH region and/or the EPDCCH region can be configured for each resource block pair. Further, the EPDCCH regions may be constituted by all OFDM symbols, regardless of the number of OFDM symbols in the PDCCH region.

Here, the number of resource blocks may be changed depending on the frequency bandwidth (system bandwidth) used by the communication system. For example, it is possible to use 6 to 110 resource blocks, and the unit is also referred to as a component carrier. Further, the base station 100 can configure a plurality of component carriers by frequency aggregation for the terminal 200. For example, the base station 100 can configure one component carrier as 20 MHz, configure continuous and/or discontinuous five component carriers in the frequency direction, and set the total bandwidth available in the communication system as 100 MHz, for the terminal 200.

Here, in the wireless communication system according to the present embodiment, the aggregation of a plurality of serving cells (simply, also referred to as cell) (referred to as the carrier aggregation) are supported in downlink and uplink. For example, it is possible to use the transmission bandwidth of up to 110 resource blocks in each of the serving cells. Further, in the carrier aggregation, one serving cell is defined as a primary cell (PCell). Further, in the carrier aggregation, serving cells other than the primary cell are defined as secondary cells (SCell).

In addition, the carriers corresponding to the serving cell in downlink are defined as downlink component carriers (DLCC). Further, the carriers corresponding to the primary cell in downlink are defined as downlink primary component carriers (DLPCC). Further, carriers corresponding to the secondary cell in downlink are defined as downlink secondary component carriers (DLSCC).

Further, the carriers corresponding to the serving cell in uplink are defined as uplink component carriers (ULCC). Further, the carriers corresponding to the primary cell in uplink are defined as uplink primary component carriers (ULPCC). Further, carriers corresponding to the secondary cell in uplink are defined as uplink secondary component carriers (ULSCC).

In other words, in the carrier aggregation, a plurality of component carriers are aggregated in order to support a wide transmission bandwidth. Here, for example, a primary base station can be regarded as the primary cell, and a secondary base station can be regarded as a secondary cell (configured by the base station 100 for the terminal 200) (also referred to as HetNet deployment with a carrier aggregation).

### PDCCH

Hereinafter, the configuration of the PDCCH will be described in detail. The PDCCH (a first control channel) consists of a plurality of control channel elements (CCE). The number of CCEs used in each downlink component carrier is dependent on the downlink component carrier bandwidth, the number of OFDM symbols constituting the PDCCH, and the number of transmission antenna ports of the cell-specific reference signals in downlink according to the number of transmission antennas of the base station 100 used in communication. The CCE consists of a plurality of downlink resource elements (resource that is defined by one OFDM symbol and one subcarrier).

The number for identifying the CCE is assigned to the CCE used between the base station 100 and the terminal 200. The numbering of the CCEs is performed according to a predetermined rule. Here, CCE_t represents the CCE of the CCE number t. The PDCCH consists of an aggregation including a plurality of CCEs (CCE aggregation). The number of CCEs constituting the aggregation is referred to as "CCE aggregation level". The CCE aggregation level constituting the PDCCH is set by the base station 100 according to the coding rate which is set to PDCCH, and the number of bits of the DCI included in the PDCCH. In addition, the combination of the CCE aggregation levels that may be used for the terminal 200 is determined in advance. Further, the aggregation constituted by n CCEs is referred to as "CCE aggregation level n".

One resource element group (REG) consists of four adjacent downlink resource elements in the frequency domain. In addition, one CCE consists of nine different resource element groups which are distributed in the frequency domain and the time domain. Specifically, interleaving is performed on the entire downlink component carrier, in units of resource element groups, by using a block interleaver for all resource element groups which are numbered, and one CCE consists of nine resource element groups of continuous numbers after interleaving.

A search space (SS) which is a region for searching for the PDCCH is configured for each terminal. The SS consists of a plurality of CCEs. The SS consists of a plurality of CCEs of the continuous numbers from the smallest number of CCE, and the number of the plurality of CCEs of the continuous numbers is pre-defined. The SS of each CCE aggregation level consists of an aggregation of a plurality of PDCCH candidates. The SS may be classified into a cell-specific SS (CSS) in which the number of the smallest CCE is common in a cell, and a UE-specific SS (USS) in which the number of the smallest CCE is specific to a terminal. A PDCCH to which control information such as system information or information about paging, which is read by a plurality of terminals, is allocated, or a PDCCH to which a downlink/uplink grant indicating an instruction of fallback and random access to a lower transmission scheme is allocated can be disposed in the CSS.

The base station 100 transmits a PDCCH by using one or more CCEs in the SS which is configured in the terminal 200. The terminal 200 decodes a received signal by using one or more CCEs in the SS and performs a process for detecting the PDCCH addressed to the terminal 200 (referred to as blind decoding). The terminal 200 configures different SSs for each CCE aggregation level. Thereafter, the terminal 200 performs blind decoding by using a predetermined combination of CCEs in a different SS for each CCE aggregation level. In other words, the terminal 200 performs blind decoding for each PDCCH candidate in a different SS for each CCE aggregation level. This series of processes of the terminal 200 is referred to as PDCCH monitoring.

### EPDCCH

Hereinafter, the details of the EPDCCH to be mapped in the EPDCCH region will be described. The EPDCCHs (second control channel, PDCCH on PDSCH, or Enhanced PDCCH) are mapped to the EPDCCH region. When the base station 100 notifies the terminal 200 of the EPDCCH through the EPDCCH region, the base station 100 configures EPDCCH monitoring for the terminal 200, and maps the EPDCCH for the terminal 200 to the EPDCCH region. Further, when the base station 100 notifies the terminal 200 of the PDCCH through the PDCCH region, the base station 100 may map the PDCCH for the terminal 200 to the PDCCH region regardless of the configuration of the EPDCCH monitoring for the terminal 200. Further, when the base station 100 notifies the terminal 200 of the PDCCH through the PDCCH region, the base station 100 may map the PDCCH for the terminal 200 to the PDCCH region, when the base station 100 does not configure the EPDCCH monitoring for the terminal 200.

Meanwhile, when the EPDCCH monitoring is configured by the base station 100, the terminal 200 performs blind decoding on the EPDCCH addressed to the terminal 200 in the PDCCH region and/or the EPDCCH addressed to the terminal 200 in the EPDCCH region. Further, when the EPDCCH monitoring is not configured by the base station 100, the terminal 200 does not perform blind decoding on the PDCCH addressed to the terminal 200 in the PDCCH region.

The base station 100 configures the EPDCCH region in the terminal 200. The EPDCCH region consists of one or more RB pairs. In other words, the EPDCCH region can be configured, with a RB pair or the RBG which is an RB pair group as a unit. Here, the number of RB pairs constituting the EPDCCH region is a plurality of predetermined values which are defined in advance. For example, the number of RB pairs constituting the EPDCCH region can be any one of 1, 2, 4, 8, or 16. Further, the base station 100 can configure a search space in the EPDCCH region which is configured in the terminal 200.

The base station 100 maps the EPDCCH for the terminal 200 to the search space of the configured EPDCCH region. Further, the base station 100 can cause some or all of the EPDCCH region and/or the search space to be common to a plurality of terminals. In other words, a plurality of EPDCCHs for a plurality of terminals can be multiplexed in the EPDCCH region and/or the search space. Here, the EPDCCH consists of a predetermined number of enhanced control channel elements (ECCEs). The ECCE is a unit constituting the EPDCCH. The ECCE consists of a predetermined number of enhanced resource element groups (EREGs).

Hereinafter, the details of the EPDCCH will be described. The EPDCCHs mapped to the EPDCCH region are processed for respective pieces of control information for one or a plurality of terminals, and similarly to the PDSCH, are subjected to the scramble process, a modulation process, a layer mapping process, a pre-coding process, and the like. Further, the same pre-coding process can be performed on the EPDCCH and the EPDCCH demodulation reference signal.

Hereinafter, a search space (SS) which is a region for searching for (blind decoding) the EPDCCH by the terminal 200 will be described. For the terminal 200, the EPDCCH region is configured and a plurality of ECCEs in the EPDCCH region are recognized by the base station 100. Further, for the terminal 200, the SS is configured by the base station 100. For example, for the terminal 200, an ECCE number recognized as the SS is configured by the base station 100. For example, for the terminal 200, one ECCE number which is a start ECCE number (an ECCE number as a reference) for recognizing the SS is configured by the base station 100. The terminal 200 recognizes the SS specific to the terminal 200, based on the start ECCE number and a pre-defined rule. Here, the start ECCE number is configured by control information which is uniquely transmitted to the terminal 200 from the base station 100. Further, the start ECCE number may be determined based on the RNTI which is configured to be specific to the terminal 200 by the base station 100. Further, the start ECCE number may be determined based on the control information which is uniquely transmitted to the terminal 200 from the base station 100 and the RNTI which is configured to be specific to the terminal 200 by the base station 100. Further, the start ECCE number may be determined, based on the subframe number which is assigned to each subframe or the slot number which is assigned to each slot. Thus, the start ECCE number is information specific to the terminal 200 and specific to each subframe or each slot. Therefore, the SS of the terminal 200 can be configured so as to be different for each subframe or each slot. Further, various methods can be used for a rule for recognizing the SS from the start ECCE number.

It is possible to configure a SS for searching for the EPDCCH in the terminal 200, with one or more ECCEs. In other words, with the ECCE in the region configured as the EPDCCH region as a unit, the SS consists of the aggregation constituted by one or more ECCEs (ECCE Aggregation). The number of ECCEs constituting the aggregation is referred to as "ECCE aggregation level". The SS consists of a plurality of ECCEs of continuous numbers from the smallest ECCE, and the number of one or more ECCEs of continuous numbers is predetermined. The SS of each ECCE aggregation level consists of an aggregation of a plurality of EPDCCH candidates. Further, the number of EPDCCH candidates may be defined for each ECCE aggregation level. Further, the SS may be configured for each ECCE aggregation level. For example, a start ECCE for configuring the SS may be configured for each ECCE aggregation level.

The base station 100 transmits the EPDCCH by using one or more ECCEs among the ECCEs that are configured in the terminal 200. The terminal 200 performs decoding of the received signal by using one or more ECCEs in the SS and performs a process (blind decoding) for detecting the EPDCCH addressed to the terminal 200. The terminal 200 configures a different SS for each ECCE aggregation level. Thereafter, the terminal 200 performs blind decoding by using the ECCEs of the combination that is pre-determined in the different SS for each ECCE aggregation level. In other words, the terminal 200 performs blind decoding on each EPDCCH candidate in a different SS for each ECCE aggregation level (monitors the EPDCCH).

An example of an SS for searching for the EPDCCH in the terminal 200 will be described. The number of ECCEs in the EPDCCH region is 16. The start ECCE number is ECCE 12. The SS continues to shift in the direction of the ECCE number increasing, from the start ECCE number in order. Further, in the SS when the ECCE number is the greatest ECCE number among the ECCEs in the EPDCCH region, the ECCE number to be shifted next is the smallest ECCE number among the ECCEs in the EPDCCH region. In other words, when the number of ECCEs in the EPDCCH region is N, and the start ECCE number is X, the ECCE number which is shifted at an m-th time is mod(X+m, N). Here, mod(A, B) represents the remainder obtained by dividing A by B. In other words, the SS is cyclically configured in the ECCE in the EPDCCH region. For example, when the ECCE aggregation level is 4, the number of EPDCCH candidates is 2. The first EPDCCH candidate consists of ECCE 12, ECCE 13, ECCE 14, and ECCE 15. The second EPDCCH candidate consists of ECCE 16, ECCE 1, ECCE 2, and ECCE 3. Thus, the EPDCCH region is configured, with predetermined RBs as a unit, such that the EPDCCH can be mapped in a predetermined RB. In other words, it is possible to efficiently configure the resource to which an EPDCCH is mapped.

Further, another example of an SS for searching for the EPDCCH in the terminal 200 will be described. This example is different from the previously described example of an SS as follows. ECCEs constituting one EPDCCH are cyclically constituted by ECCEs of a predetermined number smaller than the number of ECCEs in the EPDCCH region. For example, among 16 ECCEs, the resources for every four ECCEs from the ECCE having a smallest ECCE number are set as a unit for mapping one EPDCCH. For example, when the ECCE aggregation level is 2, the number of EPDCCH candidates is 6. Further, each of the EPDCCH candidates is configured (defined) so as to be mapped to as many units as possible, in units of mapping one EPDCCH. For example, the first EPDCCH candidate consists of ECCE 12 and ECCE 9. The second EPDCCH candidate consists of ECCE 16 and ECCE 13. The third EPDCCH candidate consists of ECCE 4 and ECCE 1. The fourth EPDCCH candidate consists of ECCE 8 and ECCE 5. The fifth EPDCCH candidate consists of ECCE 10 and ECCE 11. The sixth EPDCCH candidate consists of ECCE 14 and ECCE 15. Thus, the EPDCCH region is configured, with predetermined RBs as a unit, such that the EPDCCH can be mapped in predetermined RBs. In other words, it is possible to efficiently configure the resource to which the EPDCCH is mapped. Further, in the localized mapping, when one RB consists of predetermined ECCEs, one EPDCCH can be mapped to only one RB. In addition, the EPDCCH having the ECCE aggregation level 8 is mapped to two RBs. Therefore, when performing a terminal-specific precoding process on the EPDCCH, a gain by the precoding process is efficiently obtained. Further, the terminal 200 can recognize the candidates for detecting the mapped EPDCCH.

In addition, in the above description, all ECCEs obtained from the RB pairs that are configured as the EPDCCH region are the range for configuring the SS, but this is not limiting. For example, ECCEs obtained from some of the RB pairs that are configured as the EPDCCH region may be the range for configuring the SS. In other words, the RB pairs or ECCEs which are configured as the EPDCCH region may be different from the RB pairs or ECCEs which are configured as the SS. Even in this case, it is preferable that a multiple of a predetermined number is a unit for the RB pairs which are configured as the SS. For example, when the number of RB pairs which are configured as the EPDCCH region is 16, and the RB numbers in the EPDCCH region are RB1 to RB16, the ECCEs configured as the SS are assumed to be ECCEs obtained from RB5 to RB8, and RB13 to RB16. Further, the resource configured as the SS may be an ECCE, with multiples of a predetermined number as a unit. When ECCEs obtained from some of PRB configured as the EPDCCH region are assumed as a range for configuring the SS, the base station 100 notifies the terminal 200 of information indicating RB pairs configured as the EPDCCH region and information indicating a range configuring as the SS among the RB pairs, through RRC signaling.

In addition the case where the ECCE aggregation levels are 1, 2, 4, and 8 has been described, but this is not limiting. A combination of first ECCE aggregation levels and a combination of second ECCE aggregation levels may be switched depending on the type of the subframe and/or a cyclic prefix length. The combination of the first ECCE aggregation levels is 1, 2, 4, and 8. The combination of the second ECCE aggregation levels is 2, 4, 8, and 16. Thus, when the number of resource elements for transmitting the EPDCCH changes depending on the type of the subframe and/or the cyclic prefix length, communication can be performed without significant deterioration in the required quality of the EPDCCH. Further, in order to change a predetermined reception quality of the EPDCCH and the overhead of the EPDCCH, other ECCE aggregation levels may be used.

Hereinafter, the details of the structure of the EREG in the RB pair will be described. One RB pair consists of a predetermined number of EREGs. For example, one RB pair consists of 16 EREGs. A number (index) for identification is given to each EREG. For example, when one RB pair consists of 16 EREGs, 0 to 15 are used as the EREG numbers for identifying the EREG. The EREGs of the EREG numbers 0 to 15 are referred to as EREG 0 to EREG 15. The numbering of EREGs in one RB pair is performed based on a predetermined rule.

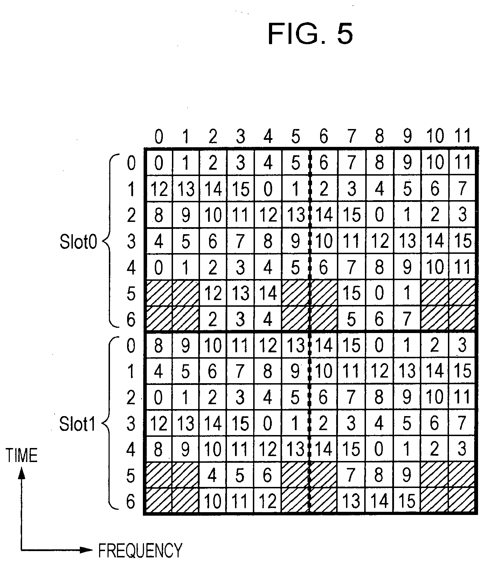

Fig. 5 illustrates the structure of an EREG in one RB pair. The number assigned to each resource element represents an EREG number. In one RB pair, the EREG numbers EREG 0 to EREG 15 are mapped in order, by a frequency priority mapping rule (frequency-first and time-second).

Further, in the following description, in each RB, the resource element indicated by the k-th subcarrier and the l-th OFDM symbol is represented as (k, l) . An index (l=0, 1, ..., 6) is assigned to each OFDM symbol in the time direction for seven OFDM symbols, in each slot of each RB pair. The index for the OFDM symbol is referred to as an OFDM symbol number. Further, an index (k=0, 1, ..., 11) is assigned to each subcarrier in the frequency direction, for 12 subcarriers of each RB pair. The index for the subcarrier is referred to as a subcarrier number. In addition, the subcarrier number can be assigned continuously over the system bandwidth (component carrier). For example, when the subcarrier number (k₀=0, 1, ..., 11) in each RB pair is assigned, the subcarrier number k in the system bandwidth is also expressed as Nsc^{RB}×n_{RB}+k₀. Here, N_{SC}^{RB} represents the number of subcarriers in one RB or RB pair. n_{RB} represents the index of the RB or the RB pair that can be assigned continuously over the system bandwidth (component carrier), n_{RB} = 0, 1, ..., N_{RB} ^{DL}-1. The index of the RB or the RB pair is referred to as the RB number or the RB pair number. Further, an index for a slot (slot number) is assigned to each slot. For example, even-numbered slot numbers are the slots (slot 0) in the first half of each subframe. Further, odd-numbered slot numbers are the slots (slot 1) in the second half of each subframe.

Here, the frequency priority mapping rule is a rule by which mapping objects are mapped from a resource element of the first OFDM symbol and the subcarrier of the lowest frequency, in order, with priority to a resource element in a frequency-increasing direction in each OFDM symbol, in a plurality of resource elements in a mapping region, and mapping is performed similarly for the subsequent OFDM symbol. Specifically, the frequency priority mapping rule is a rule for mapping the mapping object, in a plurality of resource elements in a mapping region, as follows. Here, the mapping object includes an EREG, an EREG number, an ECCE, an ECCE number, an RB pair, an RB pair number, an antenna port, an antenna port number, a signal, data, a channel, an EPDCCH, and/or an EPDCCH number. In addition, since the mapping based on the frequency priority mapping rule can be applied to association with antenna ports and the like, the mapping may be expressed as association. In other words, the frequency priority mapping rule may be expressed as frequency priority association rule. Further, the frequency priority mapping rule and the frequency priority association rule is also referred to as a frequency priority rule.

(1) A mapping object is mapped to a resource element in an earlier OFDM symbol in a time direction and a subcarrier of the lowest frequency. Further, mapping objects are mapped to resource elements in a frequency-increasing direction from the resource element, in order.
(2) When the mapping resource element is not present in the OFDM symbol, the mapping object is mapped to a resource element in the next OFDM symbol and the subcarrier of the lowest frequency. Further, mapping objects are mapped to the resource elements in a frequency-increasing direction from the resource element, in order.
(3) Until the mapping resource element is not present in the region, (2) is repeated.

Further, in the mapping, the resource elements are excluded to which collision signals (an overwrite signal and an interrupt signal) other than the mapping objects are mapped. In other words, when collision signals (an overwrite signal and an interrupt signal) other than the mapping objects are mapped to the resource elements in the region to which the mapping objects are mapped, the mapping objects are mapped to the subsequent mapping resource elements while skipping these resource element. Here, the collision signals include the cell-specific reference signal, the channel state information reference signal, the terminal-specific reference signal, the EPDCCH demodulation reference signal, the EPDCCH, the PDCCH, the channel, the broadcast channel, the synchronization signal, and/or data. In addition, when collision signals other than the mapping objects are mapped to the resource elements in the region to which the mapping objects are mapped, the mapping objects are mapped without skipping over the resource elements, or the collision signals can be overwritten to the resource elements. In other words, the mapping object is punctured for the resource elements to which the collision signals are mapped. Further, whether the mapping object is skipped or is punctured for the resource elements to which the collision signals are mapped is determined according to the collision signals.

In Fig. 5, the EREG numbers EREG 0 to EREG 15 are mapped in order, to the resource elements in which k increases from (0, 0) in the slot 0. When k is a maximum value, 1 is increased, and the EREG numbers are mapped to the resource elements in which k increases from (0, 1) in order. This is repeated until l is a maximum value. Further, the slot 1 is mapped similarly, following the slot 0.

Further, the EREG numbers are mapped while skipping the resource elements to which EPDCCH demodulation reference signals are mapped. Further, the EREG numbers are mapped, regardless of the mapping of the cell-specific reference signal, the channel state information reference signal and/or the PDCCH region. In other words, the EREG numbers are mapped to the resource elements in the RB pair, without depending on the signals to be mapped to the resource elements, except for the EPDCCH demodulation reference signals. The terminal 200 recognizes that the EPDCCHs have not been mapped in the resource elements in which the EPDCCH demodulation reference signal, the cell-specific reference signal, the channel state information reference signal and/or the PDCCH region are mapped. Thus, since the definition of the EREG is determined without depending on the signal to be mapped to the resource elements, it is possible to reduce the process and storage capacity in the base station 100 and the terminal 200.

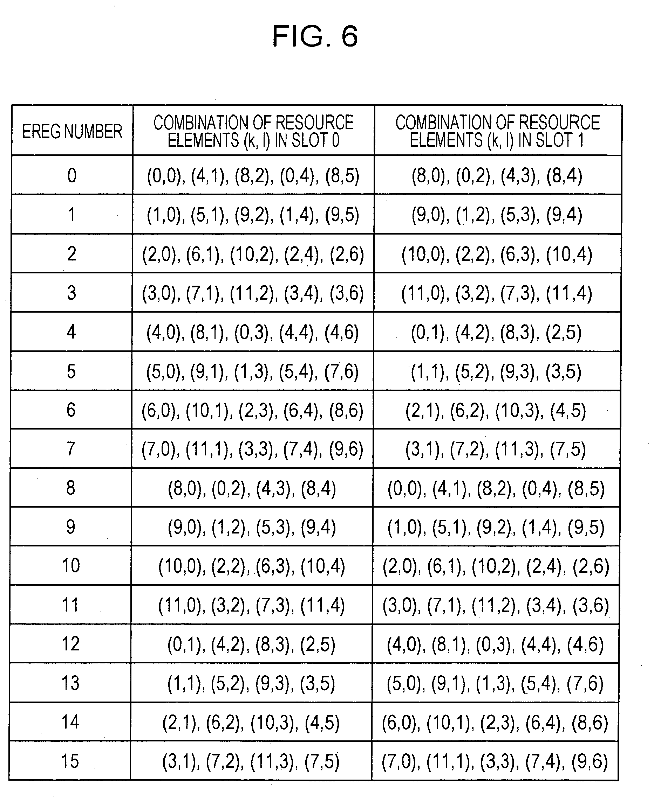

Fig. 6 is a diagram illustrating an example of a combination of resource elements for EREG numbers in one RB pair. Fig. 6 is combinations of resource elements for the EREG numbers in the EREG structure illustrated in Fig. 5. Each EREG consists of nine resource elements.

Further, the ECCE consists of a predetermined number of EREGs. For example, the ECCE consists of four or eight EREGs. Here, in the RB pair, the number of resource elements available in the mapping of the EPDCCH is determined depending on the number of resource elements to which the cell-specific reference signal, the channel state information reference signal and/or the PDCCH region are mapped. In other words, the number of resource elements available in the mapping of the EPDCCH is the number of resource elements except for the cell-specific reference signal, the channel state information reference signal and/or the PDCCH region. The number of EREGs constituting the ECCE is determined depending on the number of resource elements available in the mapping of the EPDCCH in the RB pair. For example, when the number of resource elements available in the mapping of the EPDCCH is equal to or greater than a predetermined number, the number of EREGs constituting the ECCE is 4. When the number of resource elements available in the mapping of the EPDCCH is smaller than the predetermined number, the number of EREGs constituting the ECCE is 8. It is preferable that the predetermined number is set such that the EPDCCH to be mapped by using the ECCE is not less than a predetermined coding rate. Thus, the terminal 200 can maintain predetermined reception quality during the reception of the EPDCCH.

Further, the ECCE consists of the EREGs in one or a plurality of RB pairs. In other words, a plurality of mapping rules (mapping method, association) between the EREG and the ECCE are defined. The mapping rule between the EREG and the ECCE is distribution mapping (distribution transmission) or localized mapping (localized transmission). Further, the mapping rule between the EREG and the ECCE can be configured in each EPDCCH region. In each EPDCCH region, distribution mapping or localized mapping is configured. The base station 100 can include the configuration indicating distribution mapping or localized mapping, in the configuration regarding the EPDCCH for the terminal 200. In distribution mapping, the ECCEs are configured by being mapped by using the EREGs in a plurality of RB pairs, and distributed in a plurality of RB pairs. In the case of distribution mapping, some of the EREGs constituting the ECCE are mapped to the EREGs in a different RB pair. In localized mapping, the ECCE is locally mapped to one RB pair. In the case of localized mapping, all of the EREGs constituting the ECCE are mapped by using the EREGs in one RB pair.

Further, the EREGs constituting the ECCE may be EREGs of a predetermined EREG number.

When the ECCE consists of four EREGs, the EREG numbers of the EREGs may be mod(i, 16), mod(i+4, 16), mod(i+8, 16), and mod(i+12, 16). Here, i is an integer, and mod(a, b) represents the remainder obtained by dividing a by b.

When the ECCE consists of eight EREGs, the EREG numbers of the EREGs may be mod(i, 16), mod(i+2, 16), mod(i+4, 16), mod(i+6, 16), mod(i+8, 16), mod(i+10, 16), mod(i+12, 16), and mod(i+14, 16).

When the ECCE consists of four EREGs, and the EPDCCH is locally mapped, in each RB pair, four ECCEs are configured. In this case, i is integers 0 to 3. A certain ECCE consists of an EREG 0, an EREG 4, an EREG 8, and an EREG 12 in the same RB pair. Another ECCE consists of an EREG 1, an EREG 5, an EREG 9, and an EREG 13 in the same RB pair. Another ECCE consists of an EREG 2, an EREG 6, an EREG 10, and an EREG 14 in the same RB pair. Another ECCE consists of an EREG 3, an EREG 7, an EREG 11, and an EREG 15 in the same RB pair.

When the ECCE consists of eight EREGs, and the EPDCCH is locally mapped, in each RB pair, two ECCEs are configured. In this case, i is an integer 0 or 1. A certain ECCE consists of an EREG 0, an EREG 2, an EREG 4, an EREG 6, an EREG 8, an EREG 10, an EREG 12, and an EREG 14 in the same RB pair. Another ECCE consists of an EREG 1, an EREG 3, an EREG 5, an EREG 7, an EREG 9, an EREG 11, an EREG 13, and an EREG 15 in the same RB pair.

When the EPDCCH is subjected to distribution mapping, each ECCE consists of EREGs in a plurality of RB pairs. Further, in the configuration of a certain ECCE, the RB pairs constituting the EREG can be determined by the number of RB pairs constituting the EPDCCH region.

When the ECCE consists of four EREGs and the EPDCCH region consists of four RB pairs, each ECCE consists of EREGs in a different RB pair. In this case, 16 ECCEs are configured, here, i is integers of 0 to 15. For example, a certain ECCE consists of an EREG 0, an EREG 4, an EREG 8, and an EREG 12 in a different RB pair. Another ECCE consists of an EREG 1, an EREG 5, an EREG 9, and an EREG 13 in a different RB pair. Another ECCE consists of an EREG 2, an EREG 6, an EREG 10, and an EREG 14 in a different RB pair. Another ECCE consists of an EREG 3, an EREG 7, an EREG 11, and an EREG 15 in a different RB pair.

Further, when the ECCE consists of four EREGs and the EPDCCH region consists of more than four RB pairs, similarly to the case where the EPDCCH region consists of four RB pairs, each ECCE consists of EREGs in a different RB pair. Further, when the ECCE consists of four EREGs and the EPDCCH region consists of two RB pairs, each ECCE consists of two EREGs in each RB pair.

When the ECCE consists of eight EREGs and the EPDCCH region consists of eight RB pairs, each ECCE consists of EREGs in different RB pairs. In this case, 16 ECCEs are configured, here, i is integers of 0 to 15. For example, a certain ECCE consists of an EREG 0, an EREG 2, an EREG 4, an EREG 6, an EREG 8, an EREG 10, an EREG 12, and an EREG 14 in a different RB pair. Another ECCE consists of an EREG 1, an EREG 3, an EREG 5, an EREG 7, an EREG 9, an EREG 11, an EREG 13, and an EREG 15 in a different RB pair.

Further, even if the ECCE consists of eight EREGs and the EPDCCH region consists of more than eight RB pairs, each ECCE may be constituted by EREGs in four RB pairs. Thus, when the number of EPDCCHs that are mapped to the EPDCCH region is small, some RB pairs in the EPDCCH region are not used in the mapping of EPDCCH but can be used for the mapping of other channels such as a PDSCH. Therefore, resource utilization efficiency is improved.

When the ECCE consists of eight EREGs and the EPDCCH region consists of more than eight RB pairs, similarly to the case where the EPDCCH region consists of eight RB pairs, each ECCE consists of EREGs in different RB pairs. Further, when the ECCE consists of eight EREGs and the EPDCCH region consists of four RB pairs, each ECCE consists of two EREGs in each RB pair. Further, when the ECCE consists of four EREGs and the EPDCCH region consists of two RB pairs, each ECCE consists of four EREGs in each RB pair.

From the above, the mapping method to the PRB pairs of the EPDCCH for the terminal 200 by the base station 100 is as follows. First, the EPDCCH is mapped to one or a plurality of ECCEs. Next, a plurality of EREGs constituting the ECCE in the case of distribution mapping are mapped to the EREGs in a plurality of RB pairs. Further, a plurality of EREGs constituting the ECCE in the case of localized mapping are mapped to the EREGs in a plurality of RB pairs. Next, one or a plurality of RB pairs constituting each EREG are mapped to the PRB pair of the EPDCCH region.

Here, various methods can be used for the numbering of the RB pairs used as the EPDCCH region. The numbering of the RB pairs used as the EPDCCH region is performed according to a predetermined rule. For example, the numbers of RB pairs used as the EPDCCH region may be set from the RB pair having a lowest frequency in order, in the EPDCCH region.

Meanwhile, a method for the terminal 200 to detect the EPDCCH transmitted from the base station 100 is as follows. First, the terminal 200 recognizes the PRB pair of the EPDCCH region which is configured from the base station 100, as an RB pair used as an EPDCCH region. Next, the terminal 200 recognizes EREGs constituting the ECCE in respective RB pairs used as the EPDCCH region. Next, the terminal 200 recognizes the ECCE based on the recognized EREG or resource element, depending on whether the EPDCCH is subjected to localized mapping or distribution mapping. Further, the terminal 200 performs detection process (blind decoding) of the EPDCCH, based on the recognized ECCE.

Next, the effects of the EREG structure and/or the ECCE structure which are described above will be described. The PDCCH, the cell-specific reference signal, the channel state information reference signal, the terminal-specific reference signal, the broadcast channel, the synchronization signal and the like may be mapped (multiplexed) to the resource elements of the RB pairs used as the EPDCCH region. Specially, when the terminal-specific reference signal is used to detect (demodulate) the EPDCCH, some or all of the EPDCCH modulation reference signals of the antenna ports 107 to 110 are mapped (multiplexed) to the RB pairs to which the EPDCCH is mapped. In addition, the PDCCH, the cell-specific reference signal, the channel state information reference signal, the broadcast channel, and the synchronization signal may not be mapped to the resource elements of the RB pairs used as the EPDCCH region. Further, when the EPDCCH demodulation reference signals of the CDM group 1 and the CDM group 2 are used in one RB pair to which the EPDCCH is mapped, as illustrated in Fig. 4, the number of resource elements to which the EPDCCH can be mapped except for the resource elements to which the EPDCCH demodulation reference signals are mapped is 144.

When only EPDCCH modulation reference signals of the CDM group 1 and the CDM group 2 are mapped in the EREG and the EREG which are configured by using the above-described method, the number of resource elements constituting each EREG is nine or 18. Further, when only EPDCCH modulation reference signals of the CDM group 1 and the CDM group 2 are mapped, in the ECCE configuration obtained based on the EREG structure, the number of resource elements constituting each ECCE is 36. Here, the number of resource elements constituting the CCE used in the PDCCH is 36. The number of resource elements constituting the ECCE used for the EPDCCH and the number of resource elements constituting the CCE used for the PDCCH are equal. Therefore, for the EPDCCH, it is possible to use the same transmission method, reception method, the signal process, and the like as that in the PDCCH. In other words, since the transmission method, reception method, the signal process, and the like can be common to the PDCCH and the EPDCCH, it is possible to reduce the loads of the base station 100 and the terminal 200.

Further, when the PDCCH and/or the cell-specific reference signal are mapped in the RB pair to which the EPDCCH is mapped, the number of resource elements to which the EPDCCH can be mapped decreases. Here, when the number of resource elements to which the EPDCCH can be mapped decreases, the variation in the number of resource elements between ECCEs which are obtained based on the EREG structure illustrated in Fig. 5 will be described. First, when the number of antenna ports of the cell-specific reference signal is 1 (antenna port 0), regardless of the number of PDCCHs (0 to 3), the difference between the maximum value and the minimum value of the number of resource elements between ECCEs is 1. Further, when the number of antenna ports of the cell-specific reference signal is 2 (antenna ports 0 and 1), regardless of the number of PDCCHs (0 to 3), the difference between the maximum value and the minimum value of the number of resource elements between ECCEs is 0, and there is no variation in the number of resource elements between ECCEs. Further, when the number of antenna ports of the cell-specific reference signal is 4 (antenna ports 0 to 3), regardless of the number of PDCCHs (0 to 3), the difference between the maximum value and the minimum value of the number of resource elements between ECCEs is 0, and there is no variation in the number of resource elements between ECCEs. In other words, by using the EREG structure illustrated in Fig. 5, the variation in the number of resource elements between ECCEs which are obtained based on the EREG structure is suppressed, regardless of the possible combination of the PDCCH region and the number of antenna ports of the cell-specific reference signal. Therefore, the size of the resource is almost unchanged due to the ECCE used for the transmission of the EPDCCH. In other words, the difference between the transmission characteristics due to the coding gain for the EPDCCH becomes small, due to the ECCE used for the transmission of the EPDCCH. Thus, it is possible to greatly reduce the load of the scheduling process when the base station 100 transmits the EPDCCH to the terminal 200.

Further, when the number of antenna ports of the cell-specific reference signal is 1 (antenna port 0), with respect to the RB pair to which the EPDCCH is mapped, the number of antenna ports of the cell-specific reference signal can be considered to be 2 (antenna ports 0 and 1). In other words, when the number of antenna ports of the cell-specific reference signal which is transmitted by the base station 100 is 1 (antenna port 0), during the transmission of the EPDCCH to the terminal 200, the base station 100 maps the EPDCCH, assuming that the number of antenna ports of the cell-specific reference signal is 2 (antenna ports 0, and 1). When the number of antenna ports of the cell-specific reference signal which is transmitted by the base station 100 is 1 (antenna port 0), when detecting the EPDCCH transmitted from the base station 100, the terminal 200 demaps the EPDCCH, assuming that the number of antenna ports of the cell-specific reference signal is 2 (antenna ports 0 and 1).

Hereinafter, a description will be made regarding the association (mapping, correspondence) between the resource used in the transmission of the EPDCCH and the antenna port of the EPDCCH demodulation reference signal. As already described, the base station 100 transmits the EPDCCH, and the EPDCCH demodulation reference signal associated with the EPDCCH. Further, the terminal 200 detects (demodulates) the EPDCCH by using the EPDCCH demodulation reference signal. The resource used in the transmission of the EPDCCH and the antenna port of the EPDCCH demodulation reference signal are associated by using a predetermined method. Here, the resources used in the transmission of the EPDCCH are the EPDCCH region, the EPDCCH, the EREG, the EREG set, the ECCE, or the resource element. In addition, the EPDCCH demodulation reference signal is simply referred to as a reference signal.

Further, the association between the resource used in the transmission of the EPDCCH and the antenna port of the EPDCCH demodulation reference signal can be switched, based on the configuration of the EPDCCH. For example, the association between the resource used in the transmission of the EPDCCH and the antenna port of the EPDCCH demodulation reference signal may be different depending on the case of transmitting the EPDCCH by localized mapping or the case of transmitting the EPDCCH by distribution mapping. In other words, the association between the resource used in the transmission of the EPDCCH and the antenna port of the EPDCCH demodulation reference signal is determined, depending on whether the mapping rule configured in the EPDCCH region is localized mapping or distribution mapping.

When the EPDCCH is transmitted by using localized mapping, the antenna port to be associated is determined, for each EPDCCH. First, in each RB pair, each ECCE is associated with any of the antenna ports 107 to 110. For example, in each RB pair, the antenna ports 107 to 110 are associated in order from the ECCE of the smallest ECCE number. In other words, in localized mapping, each ECCE corresponds to a different antenna port. Further, when the ECCE aggregation level is two or greater, the each EPDCCH can be transmitted by using any of the antenna ports associated with the distributed resources to be mapped. In this case, the association may be determined, further based on the terminal-specific ID, the RNTI, the RB number, the RB pair number, and/or the slot number.

In addition, the terminal 200 may be notified of the antenna port of the EPDCCH demodulation reference signal for the EPDCCH candidates to be blind decoded, from the base station 100.

When the EPDCCH is transmitted by using distribution mapping, the antenna port to be associated is determined for each resource element. It is possible to use various methods for the association. Further, in the following description, the case where the associated antenna ports are the antenna port 107 and the antenna port 109 will be described.

Further, the antenna port 107 is referred to as a first antenna port. The antenna port 109 is referred to as a second antenna port.

In an example of the association between the resource used in the transmission of the EPDCCH and the antenna port of the EPDCCH demodulation reference signal, the antenna port 107 and the antenna port 109 are associated with each other in each EREG, according to the frequency priority mapping rule.

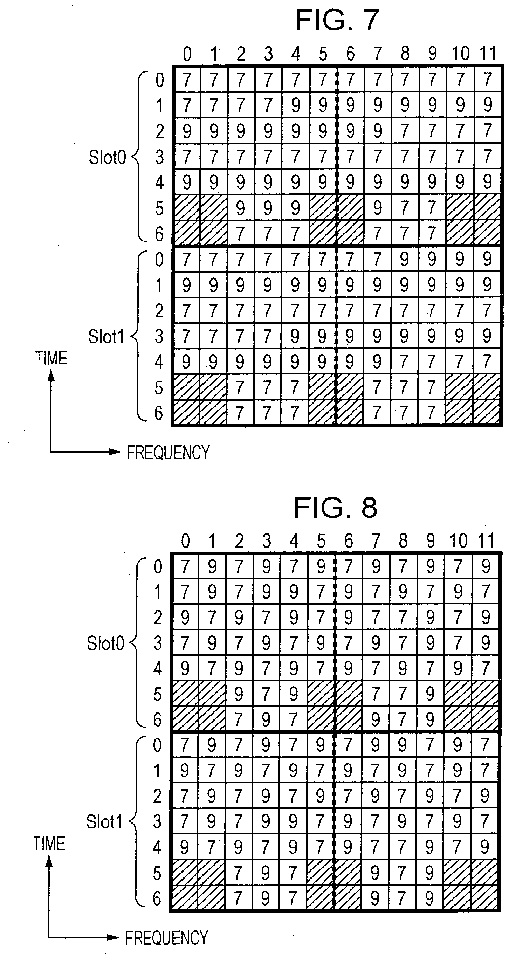

Fig. 7 illustrates an example of association between a resource element used in transmission of an EPDCCH and an antenna port of an EPDCCH demodulation reference signal. Further, Fig. 7 illustrates the association between the resource element and the antenna port of the EPDCCH demodulation reference signal in the case using the EREG structure illustrated in Fig. 5 (in other words, association between the resource element and the EREG number). Further, in Fig. 7, the number shown in each resource element represents the antenna port number. In Fig. 7, 7 represents the antenna port 107, and 9 represents the antenna port 109. For example, with respect to nine resource elements constituting the EREG 0 ((0,0), (4,1), (8,2), (0,4), and (8,5) in the slot 0, and (8,0), (0,2), (4,3), and (8,4) in the slot 1), the antenna port 107 and the antenna port 109 are associated with each other, according to the frequency priority mapping rule. In other words, five resource elements ((0,0), (8,2), (8,5) in the slot 0, and (0,2), and (8,4) in the slot 1) are associated with the antenna port 107. Four resource elements ((4,1), and (0,4) in the slot 0, and (8,0), and (4,3) in the slot 1) are associated with the antenna port 109. In addition, the case where the association with the antenna port is performed from the antenna port 107 in each EREG has been described, but the association may be performed from the antenna port 109.

Thus, in each EREG, the number of resource elements associated with the antenna port 107 and the number of resource elements associated with the antenna port 109 can be almost the same. Since it is possible to reduce the deviation between antenna ports, the frequency diversity effect is improved.

In another example of the association between the resource element used in the transmission of the EPDCCH and the antenna port of the EPDCCH demodulation reference signal, the antenna port 107 and the antenna port 109 are associated with each other, in each EREG, according to the frequency priority mapping rule. Further, the association with the antenna port is performed from the antenna port 107 or the antenna port 109, in each EREG, according to the EREG number of the associated EREG. For example, the association with the antenna port may be performed from the antenna port 107 or the antenna port 109, in each EREG, depending on whether the EREG number is an odd number or an even number.

In other words, in distribution mapping, a physical resource is given as a unit of the EREG. Each of the resource elements in a certain EREG is associated with any of two antenna ports (in other words, the antenna ports 107 and 109) in an alternating manner. If at this time, the EREG number that contains the resource element is an even number, the association is performed from the antenna port 107 in order, while if at this time, the EREG number that contains the resource element is an odd number, the association is performed from the antenna port 109 in order.

Fig. 8 illustrates an example of association between a resource element used in transmission of an EPDCCH and an antenna port of an EPDCCH demodulation reference signal. Further, Fig. 8 illustrates the association between the resource element and the antenna port of the EPDCCH demodulation reference signal in the case using the EREG structure illustrated in Fig. 5 (in other words, association between the resource element and the EREG number). Further, in Fig. 8, the number shown in each resource element represents the antenna port number. In Fig. 8, 7 represents the antenna port 107, and 9 represents the antenna port 109.

In the case of the EREG of an even EREG number, the association with the antenna port is performed from the antenna port 107 in each EREG. In the case of the EREG of an odd EREG number, the association with the antenna port is performed from the antenna port 109 in each EREG. Thus, in each EREG, in the OFDM symbol and the RB pair, the number of resource elements associated with the antenna port 107 and the number of resource elements associated with the antenna port 109 can be almost the same. Since it is possible to reduce the deviation between antenna ports, the frequency diversity effect is improved. Further, the average of the transmission power between the antenna ports is the same.

In another example of the association between the resource element used in the transmission of the EPDCCH and the antenna port of the EPDCCH demodulation reference signal, the antenna port 107 and the antenna port 109 are associated with each other, in each EREG, according to the frequency priority mapping rule. Further, the association with the antenna port is performed from the antenna port 107 or the antenna port 109 in each EREG, according to the EREG number of the associated EREG.

For example, the association with the antenna port is performed from the antenna port 107 or the antenna port 109 in each EREG, based on the quotient obtained by dividing the EREG number by a predetermined number M, (in other words, the number obtained by applying a floor function to the number obtained by dividing the EREG number by M, with 1 as a reference number).

For example, when M is 4, if the quotient obtained by dividing the EREG number by 4 is an even number, the association with the antenna port is performed from the antenna port 107, while if the quotient obtained by dividing the EREG number by 4 is an odd number, the association with the antenna port is performed from the antenna port 109. In other words, in distribution mapping, a physical resource is given as a unit of the EREG. Each of the resource elements in a certain EREG is associated with any of two antenna ports (in other words, the antenna ports 107 and 109) in an alternating manner. If at this time, the quotient obtained by dividing the EREG number containing the resource element by 4 is an even number, the association is performed in order from the antenna port 107, while if at this time, the quotient obtained by dividing the EREG number containing the resource element by 4 (in other words, the number obtained by applying a floor function to the number obtained by dividing the EREG number by 4 with 1 as a reference number) is an odd number, the association is performed in order from the antenna port 109.

As a more specific example, in the case of the EREGs of the EREG numbers 0, 1, 2, 3, 8, 9, 10, and 11, in respective EREGs, the association with the antenna port is performed from the antenna port 107, while in the case of the EREGs of the EREG numbers 4, 5, 6, 7, 12, 13, 14, and 15, the association is performed from the antenna port 109. In other words, the association with the antenna port is performed such that the deviation in the antenna ports associated with the EREGs constituting the ECCE is the same in the ECCE. Thus, in each EREG, OFDM symbol, RB pair and ECCE, the number of resource elements associated with the antenna port 107 and the number of resource elements associated with the antenna port 109 can be almost the same. Since it is possible to reduce the deviation between antenna ports, the frequency diversity effect is improved. Further, the average of the transmission power between the antenna ports is the same.

In addition, the above description has been made regarding the case where the antenna port 107 and the antenna port 109 can be associated in an alternating manner, based on the EREG number in the association between the resource element used in the transmission of the EPDCCH and the antenna port of the EPDCCH demodulation reference signal, but this is not limiting. For example, in the association between the resource element used in the transmission of the EPDCCH and the antenna port of the EPDCCH demodulation reference signal, the antenna port 107 and the antenna port 109 can be associated in an alternating manner, based on the RB pair number, the ECCE number, the subframe number, the slot number, the number identifying the EPDCCH region, and/or the number identifying the EPDCCH.

In addition, the above description has been made regarding the case where the antenna port 107 and the antenna port 109 can be associated in an alternating manner for each EREG in the association between the resource element used in the transmission of the EPDCCH and the antenna port of the EPDCCH demodulation reference signal, but this is not limiting. For example, the resources in which the association between the resource element used in the transmission of the EPDCCH and the antenna port of the EPDCCH demodulation reference signal is performed may be the RB pair, the ECCE, the subframe, the slot, the EPDCCH region, and/or the EPDCCH.

As a specific example, in another example of the association between the resource element used in the transmission of the EPDCCH and the antenna port of the EPDCCH demodulation reference signal, the antenna port 107 and the antenna port 109 can be associated with each other, in each EREG, based on the RB pair number, according to the frequency priority mapping rule. With respect to the association between the resource element used in the transmission of the EPDCCH and the antenna port of the EPDCCH demodulation reference signal, in the case of an even RB pair number, the association is performed from the antenna port 107 in each EREG, and in the case of an odd RB pair number, the association is performed from the antenna port 109 in each EREG.

Further, in the association with the antenna ports described above, the resource elements to which collision signals are mapped may be excluded. In other words, in the association with the antenna ports, when collision signals (overwrite signals and interrupt signals) are mapped to the resource elements in the EREG with which the antenna port 107 and the antenna port 109 are associated in an alternating manner (sequentially), the antenna port may be associated with the resource element to be associated next, while skipping the resource element. Here, the collision signal includes the cell-specific reference signal, the channel state information reference signal, the terminal-specific reference signal, the broadcast channel, the synchronization signal, and/or the PDCCH region. Thus, without depending on the collision signals, in each EREG, the OFDM symbol, the RB pair, and/or the ECCE, the number of resource elements associated with the antenna port 107 and the number of resource elements associated with the antenna port 109 can be almost the same.

In addition, in another example, when the channel state information reference signal is mapped to the resource elements in the EREGs which are associated with the antenna port in an alternating manner (sequentially), the antenna port is associated with the resource element, without skipping the resource element, and the channel state information reference signal can be overwritten in the resource element. In other words, the antenna port for the resource element to which the channel state information reference signal is mapped is punctured. Thus, when the EPDCCH region is shared by a plurality of terminals, the channel state information reference signal which is configured to be specific to the terminal can be mapped.

Further, when the collision signal is the PDCCH region, the PDCCH region is configured from a control field indicator (CFI) transmitted from the base station 100 for the terminal. When the CFI is configured through an RRC signaling, the terminal recognizes the PDCCH region based on the CFI transmitted through the PCFICH which is mapped to a predetermined resource element in a subframe. When the CFI is configured through the RRC signaling, the terminal recognizes the PDCCH region based on the CFI transmitted through the RRC signaling, regardless of the CFI transmitted through the PCFICH. In addition, when the CFI is not configured through the RRC signaling, the terminal may recognize the PDCCH region based on a pre-defined CFI, regardless of the CFI transmitted through the PCFICH.

In addition, it is described that whether the association with the antenna port is performed from the antenna port 107 or the antenna port 109 is determined based on the EREG number, but this is not limiting. For example, whether the association with the antenna port is performed from the antenna port 107 or the antenna port 109 may be determined based on the ECCE number, the EPDCCH number, the RB pair number, the cell ID, the RNTI, and the like. Further, for example, whether the association with the antenna port is performed from the antenna port 107 or the antenna port 109 may be configured from the base station 100.

In addition, the association with the antenna port may be fixed, regardless of the collision signal. For example, in each subframe, the resource element of the even-numbered OFDM symbol may be associated with the antenna port 107, and the resource element of the odd-numbered OFDM symbol may be associated with the antenna port 109. Further, for example, in each subframe, the resource element of the odd-numbered OFDM symbol may be associated with the antenna port 107, and the resource element of the even-numbered OFDM symbol may be associated with the antenna port 109.

Further, a description will be made regarding an example of an operation of the EPDCCH generation unit which performs the association with the antenna port described above. The EPDCCH generation unit generates the EPDCCH which is a control channel transmitted to the terminal, and associated with the first antenna port and the second antenna port. The EPDCCH generation unit maps the EPDCCH to the resource element included in the EREG which is allocated for transmission of the EPDCCH. The EPDCCH generation unit associates the first antenna port or the second antenna port in an alternating manner with the resource element in each EREG, according to the frequency priority rule. The EPDCCH generation unit maps the complex symbol of the EPDCCH to the resource element which is a resource element associated with the first antenna port or the second antenna port and included in the EREG which is allocated for transmission of the EPDCCH.

Further, a description will be made regarding an example of an operation of the EPDCCH processing unit which performs the detection of the EPDCCH on which the association with the antenna port described above is performed. The EPDCCH processing unit detects the EPDCCH which is mapped to the resource element included in the EREG allocated for transmission of the EPDCCH and is associated with the first antenna port and second antenna port by using the channel estimation value that is estimated by the channel estimation unit. The EPDCCH processing unit detects the EPDCCH assuming that the first antenna port and the second antenna port are associated in an alternating manner with the resource element in each EREG according to the frequency priority rule. The EPDCCH processing unit detects the EPDCCH assuming that the complex symbol of the EPDCCH is mapped to the resource element which is associated with the first antenna port or the second antenna port and is included in the EREG allocated for transmission of the EPDCCH.

Further, a plurality of patterns can be used in the EREG structure described above. The EREG structure herein includes an EREG number of the RB pair and an antenna port associated therewith. The EREG structure using a plurality of patterns can be switched based on a predetermined parameter or structure. For example, the EREG structure using a plurality of patterns can be used differently in each transmitting point (base station, cell). Further, for example, a plurality of patterns of the EREG structure can be switched based on a replacement pattern for arbitrarily replacing a set of predetermined resource elements in each RB pair. Further, the base station 100 can explicitly notify the terminal 200 of a parameter for switching (determining, selecting, configuring) the pattern of the EREG structure, through the RRC signaling or the PDCCH signaling. Further, the parameter for switching (determining, selecting, configuring) the pattern of the EREG structure can be implicitly determined based on other parameters or structures. As described above, since the resources used in the transmission of the EPDCCH can be randomized with respect to each other between EREGs and/or ECCEs of different patterns, by using the EREG structure of a plurality of patterns, the transmission characteristics of the EPDCCH is improved.

In order to constitute EREGs of a plurality of patterns, the EREG structure illustrated in Fig. 5 is cyclically shifted, in each OFDM symbol, in one RB pair, in the frequency direction. Specifically, the number of cyclic shifts for each OFDM symbol is determined by a predetermined method. The EREG structure illustrated in Fig. 5 is cyclically shifted in the frequency direction in one RB pair, in each OFDM symbol, based on the number of the cyclic shifts. For example, when the number of cyclic shifts for the first OFDM symbol is 5, 12 resource elements in the first OFDM symbol are cyclically shifted by five resource elements in a frequency increasing direction or decreasing direction. Further, the OFDM symbol including the EPDCCH demodulation reference signal is cyclically shifted with respect to the resource element except for the EPDCCH demodulation reference signal.

Various methods can be used for a method for determining the number of cyclic shifts for each OFDM symbol. One of determination methods is to obtain the number of cyclic shifts by calculation of s*a+β. Here, s is the OFDM symbol number in a RB pair, and is integers of 1 to 14. α is a difference in the numbers of the cyclic shifts between OFDM symbols. β is the number of cyclic shifts commonly added to all of the OFDM symbols in the RB pair. α and β are set for the terminal 200 by the base station 100 through an RRC signaling or a PDCCH signaling. Further, α and β are obtained, based on parameters which are set for the terminal 200 by the base station 100 through the RRC signaling or the PDCCH signaling. Further, α and β may be defined in advance, and determined by other parameters. Further, it is not necessary to use both α and β, and only one of α and β may be used. Further, the number of cyclic shifts may be determined, based on a predetermined Hash function.

Further, the cyclic shift for each OFDM symbol can be performed for the antenna ports associated with the resource elements. In other words, in the afore-mentioned example of the association between the resource element and the antenna port, the association between the resource element and the antenna port is performed, based on the EREG structure. Accordingly, since the association between the resource element and the antenna port is dependent on the EREG structure, it is possible to consider that the cyclic shift for each OFDM symbol may be performed also for the antenna ports associated with the resource elements. Thus, even when performing the cyclic shift, in each EREG, OFDM symbol, RB pair, and/or ECCE, the number of resource elements associated with the antenna port 107 and the number of resource elements associated with the antenna port 109 can be almost the same.

In addition, the cyclic shift for each OFDM symbol may not be performed on the antenna ports associated with the resource elements, but may be performed only on the EREG number associated with the resource elements. In other words, in another example of the association described above between the resource element and the antenna port, the association between the resource element and the antenna port is performed along with the EREG number based on the EREG structure, but the cyclic shift for each OFDM symbol is performed only on the EREG number. In other words, the association with the antenna port can be performed, based on the EREG structure (EREG number) before the cyclic shift for each OFDM symbol is performed. Thus, the association with the antenna port may be fixed, without depending on the cyclic shift for each OFDM symbol.

Hereinafter, a configuration method of the EPDCCH for the terminal 200 performed by the base station 100 (configuration method of EPDCCH region and configuration method of monitoring of EPDCCH) will be described. As the example, the configuration of the EPDCCH region and the configuration of the transmission mode implicitly indicate the configuration of the monitoring of the EPDCCH. The base station 100 configures the EPDCCH, by notifying the terminal 200 of the terminal-specific configuration information for the radio resource (RadioResourceConfigDedicated), through the control information of a higher layer (RRC signaling). The terminal-specific configuration information for the radio resource is control information used to perform configuration/change/release of the resource block, and to perform the terminal-specific configuration for the physical channel.

The base station 100 notifies the terminal 200 of the terminal-specific configuration information for the radio resource. The terminal 200 performs the terminal-specific configuration for the radio resource, based on the terminal-specific configuration information for the radio resource from the base station 100, and notifies the base station 100 of the completion of configuration of the terminal-specific configuration information for the radio resource.

The terminal-specific configuration information for the radio resource is configured to include the terminal-specific configuration information for the physical channel (PhysicalConfigDedicated). The terminal-specific configuration information for the physical channel is control information defining the terminal-specific configuration for the physical channel. The terminal-specific configuration information for the physical channel is configured to include the configuration information of a channel status report (CQI-ReportConfig), the terminal-specific configuration information (AntennaInfoDedicated) of the antenna information, and the terminal-specific configuration information of the EPDCCH (EPDCCH-ConfigDedicated). The configuration information of a channel status report is used to define the configuration information for reporting the channel status in downlink. The terminal-specific configuration information of the antenna information is used to define the terminal-specific antenna information of the base station 100. The terminal-specific configuration information of the EPDCCH is used to define the terminal-specific configuration information of the EPDCCH. Further, since the terminal-specific configuration information of the EPDCCH is notified and configured as control information specific to the terminal 200, the EPDCCH region to be configured is configured as the region specific to the terminal 200.

The configuration information of a channel status report is configured to include the configuration information of an aperiodic channel status report (cqi-ReportModeAperiodic), and configuration information of periodic channel status report (CQI-ReportPeriodic). The configuration information of an aperiodic channel status report is configuration information for aperiodically reporting the channel state of downlink 103, through the physical uplink shared channel (PUSCH). The configuration information of a periodic channel status report is configuration information for periodically reporting the channel state of downlink, through the physical uplink control channel (PUCCH).

The terminal-specific configuration information of the antenna information is configured to include a transmission mode. The transmission mode is information indicating a transmission method in which the base station 100 communicates with the terminal 200. For example, the transmission mode is pre-defined as transmission modes 1 to 10. A transmission mode 1 is a transmission mode using a single antenna port transmission scheme using an antenna port 0. A transmission mode 2 is a transmission mode using a transmission diversity scheme. A transmission mode 3 is a transmission mode using a circulation delay diversity scheme. A transmission mode 4 is a transmission mode using a closedloop spatial multiplexing scheme. A transmission mode 5 is a transmission mode using a multi-user MIMO scheme. A transmission mode 6 is a transmission mode using a closedloop spatial multiplexing scheme using a single antenna port. A transmission mode 7 is a transmission mode using a single antenna port transmission scheme using an antenna port 5. A transmission mode 8 is a transmission mode using a closedloop spatial multiplexing scheme using antenna ports 7 and 8. A transmission mode 9 is a transmission mode using a closedloop spatial multiplexing scheme using antenna ports 7 to 14. Further, the transmission modes 1 to 9 are referred to as a first transmission mode.

A transmission mode 10 is defined as a transmission mode different from the transmission modes 1 to 9. For example, the transmission mode 10 can be a transmission mode using a CoMP scheme. Here, the enhancement by the introduction of the CoMP scheme includes the optimization of the channel state report and the improvement of accuracy (for example, the introduction of preferred precoding information during CoMP communication and phase difference information between the base stations), and the like. Further, the transmission mode 10 may be a transmission mode using a communication scheme obtained by enhancing (advancing) a multi-user MIMO scheme that can be implemented by the communication schemes represented by the transmission modes 1 to 9. Here, the enhancement of the multi-user MIMO scheme includes the optimization of the channel state report and the improvement of accuracy (for example, the introduction of preferred channel quality indicator (CQI) information and the like during multi-user MIMO communication), and improvement of orthogonality between terminals multiplexed to the same resource. Further, the transmission mode 10 may be a transmission mode in which the EPDCCH region can be configured. Further, the transmission mode 10 may be a transmission mode using a CoMP scheme and/or an enhanced multi-user MIMO scheme, in addition to all or some of the communication schemes represented by the transmission modes 1 to 9. For example, the transmission mode 10 may be a transmission mode using the CoMP scheme and/or the enhanced multi-user MIMO scheme, in addition to the communication scheme represented by the transmission mode 9. Further, the transmission mode 10 may be a transmission mode in which a plurality of channel state information reference signals (CSI-RS; Channel State Information-RS) can be configured. Further, the transmission mode 10 is also referred to as a second transmission mode.

In addition, when the base station 100 transmits a data channel to the terminal 200 which is set to the transmission mode 10 capable of using a plurality of transmission schemes, the base station 100 can communicate even if there is no notification of which mode is used among the plurality of transmission schemes. In other words, even if the terminal 200 is set to the transmission mode 10 capable of using a plurality of transmission schemes, the terminal 200 can communicate even if there is no notification of which mode is used among the plurality of transmission schemes when receiving data channels.

Here, the second transmission mode is a transmission mode in which the EPDCCH can be configured. In other words, when the first transmission mode is set for the terminal 200, the base station 100 maps the control channel for the terminal 200 to the PDCCH region. Further, when the second transmission mode is set for the terminal 200, the base station 100 maps the control channel for the terminal 200 to the PDCCH region and/or the EPDCCH region. Meanwhile, when the terminal 200 is set to the first transmission mode by the base station 100, the PDCCH is blind-decoded. Further, when the terminal 200 is set to second transmission mode by the base station 100, the PDCCH and/or the EPDCCH are blind-decoded.

Further, the terminal 200 configures the control channel to be blind-decoded, regardless of the transmission mode, based on whether or not the terminal-specific configuration information of the EPDCCH is configured by the base station 100. In other words, when the terminal-specific configuration information of the EPDCCH is not set for the terminal 200, the base station 100 maps the control channel for the terminal 200 to the PDCCH region. Further, when the terminal-specific configuration information of the EPDCCH is set for the terminal 200, the base station 100 maps the control channel for the terminal 200 to the PDCCH region and/or the EPDCCH region. Meanwhile, when the terminal-specific configuration information of the EPDCCH is set by the base station 100, the terminal 200 performs blind decoding on the PDCCH and/or the EPDCCH. Further, when the terminal-specific configuration information of the EPDCCH is not set by the base station 100, the terminal 200 performs blind decoding on the PDCCH.

The terminal-specific configuration information of the EPDCCH is configured to include subframe configuration information of the EPDCCH (EPDCCH-SubframeConfig-rll). The subframe configuration information of the EPDCCH is used to define the subframe information for configuring the EPDCCH. The subframe configuration information of the EPDCCH is configured to include a subframe configuration pattern (subframeConfigPattern-r11), and configuration information of the EPDCCH (epdcch-Config-r11).

The subframe configuration pattern is information indicating the subframe for configuring the EPDCCH. For example, the subframe configuration pattern is information of a bitmap format of n bits. The information represented by each bit indicates whether or not the subframe is a subframe configured as the EPDCCH. In other words, in the subframe configuration pattern, n subframes can be configured as a period. At this time, it is possible to exclude a predetermined subframe to which the synchronization signal, the broadcast channel, and the like are mapped. Specifically, the remainder obtained by dividing the subframe number defined in each subframe by n corresponds to each bit of the subframe configuration pattern. For example, n is a previously defined value such as 8 or 40. When information for a certain subframe in the subframe configuration pattern is "1", the subframe is configured as the EPDCCH. When information for a certain subframe in the subframe configuration pattern is "0", the subframe is not configured as the EPDCCH. Further, a predetermined subframe to which the synchronization signal for the terminal 200 to synchronize with the base station 100, and the broadcast channel for broadcasting the control information of the base station 100 are mapped can be prevented from being configured in advance as the EPDCCH. Further, in another example of the subframe configuration pattern, the pattern of the subframe configured as the EPDCCH is indexed in advance, and information indicating the index is defined as the subframe configuration pattern.

The terminal-specific configuration information of the EPDCCH is configured to include resource allocation information (resourceBlockAssignment-r11). The resource allocation information is information designating the resource block which is configured as the EPDCCH. For example, it is possible to configure the EPDCCH region with one RB pair as a unit.

Here, the control information is subjected to an error detection coding process and the like, and mapped to the PDCCH and/or the EPDCCH which are physical control channels. The PDCCH and/or the EPDCCH are subjected to an error correction coding process and a modulation process, and transmitted and received through a PDCCH region or an EPDCCH region different from the PDCCH region. Here, the physical control channel referred to herein is a type of the physical channel, and a control channel defined on a physical frame.

Further, when viewed from one perspective, the PDCCH is a physical control channel using the same transmission port (antenna port) as that of the cell-specific reference signal. Further, the EPDCCH is a physical control channel using the same transmission port as that of the EPDCCH demodulation reference signal. The terminal 200 demodulates the PDCCH by using the cell-specific reference signal and demodulates the EPDCCH by using the EPDCCH demodulation reference signal. The cell-specific reference signal is a reference signal common to all terminals in the cell, and is a reference signal available in any terminal, because it is inserted into almost all resources. Therefore, the PDCCH can be demodulated by any terminal. Meanwhile, the EPDCCH demodulation reference signal is a reference signal inserted only into the allocated resource, and can be adaptively subjected to a precoding process or a beam forming process similar to data. In this case, it is possible to obtain a gain of adaptive precoding or beam forming, and a gain of frequency scheduling in the control channel disposed in the EPDCCH region. Further, the EPDCCH demodulation reference signal can be shared by a plurality of terminals. For example, when the control channel disposed in the EPDCCH region is notified while being distributed into a plurality of resources (for example, resource block), and the terminal-specific reference signal of the EPDCCH region can be shared by a plurality of terminals. In this case, it is possible to obtain a frequency diversity gain in the control channel disposed in the EPDCCH region.

Further, when viewed from a different perspective, the control channel (PDCCH) mapped to the PDCCH region is a physical control channel on OFDM symbols (symbols) located in the front part of the physical subframe, and may be disposed over the entire area of the system bandwidth (component carrier (CC)) of the OFDM symbols. Further, the control channel (EPDCCH) mapped to the EPDCCH region is a physical control channel on OFDM symbols located in the rear part of the PDCCH of the physical subframe, and may be disposed on some of the system bandwidth of the OFDM symbols. Since the PDCCH is disposed on the control channel dedicated OFDM symbol located in the front part of the physical subframe, the PDCCH can be received and demodulated before the OFDM symbols in the rear part for the physical data channel. Further, the terminal that monitors only the control channel dedicated OFDM symbols can receive the PDCCHs. Further, since the PDCCHs are distributed and disposed over an entire CC region, it is possible to randomize inter-cell interference. Further, the PDCCH region is a region that is configured to be specific to the base station 100, and is a region common to all terminals connected to the base station 100. Meanwhile, the EPDCCHs are disposed on the OFDM symbols in the rear part for the shared channel (physical data channel) that are commonly received by the terminal during communication. Further, frequency division multiplexing allows the EPDCCHs to be orthogonal-multiplexed with each other, or the EPDCCH and the physical data channel to be orthogonal-multiplexed (multiplexed without interference). Further, the EPDCCH region is a region which is configured uniquely to the terminal 200, and is a region which is configured for each terminal connected to the base station 100. In addition, the base station 100 can configure the EPDCCH region such that it is shared by a plurality of terminals. Further, the PDCCH region and the EPDCCH region are disposed on the same physical subframe. Here, the OFDM symbol is a unit in a time direction for mapping the bits of each channel.

Further, when viewed from a different perspective, the PDCCH is a cell-specific physical control channel, is a physical channel that can be obtained (detected) by both a terminal in an idle mode and a terminal in a connected mode. Further, the EPDCCH is a terminal-specific physical control channel, and is a physical channel that can be obtained only by a terminal in a connected mode. Here, the idle mode is a mode in which direct transmission and reception of data are not performed such as a mode in which the base station does not accumulate information about radio resource control (RRC) (RRC_IDLE mode) or a mode in which the mobile station performs discontinuous reception (DRX). Meanwhile, the connected mode is a mode in which direct transmission and reception of data can be performed such as a mode in which the terminal holds the information about the network (RRC_CONNECTED mode) or a mode in which the mobile station does not perform discontinuous reception (DRX). The PDCCH is a channel through which the terminal 200 is capable of performing reception without depending on the terminal-specific RRC signaling. The EPDCCH is a channel to be configured by the terminal-specific RRC signaling, and is a channel that the terminal 200 is capable of receiving through the terminal-specific RRC signaling. In other words, the PDCCH is a channel that any terminal is capable of receiving due to the pre-limited configuration, and the EPDCCH is a channel for which the change in the terminal-specific configuration is easy.

As described above, when configuring the EPDCCH, the base station 100 notifies the terminal 200 of information including the terminal-specific configuration information of the EPDCCH in the terminal-specific configuration information for the radio resource, through a dedicated RRC signaling. Further, when changing the configured EPDCCH, the base station 100 notifies the terminal 200 of the terminal-specific configuration information for the radio resource including terminal-specific configuration information of the EPDCCH having a changed parameter, similarly, through the dedicated RRC signaling. Further, when releasing the configured EPDCCH, the base station 100 notifies the terminal 200 of the release, similarly, through the dedicated RRC signaling. For example, the terminal-specific configuration information for the radio resource not including terminal-specific configuration information of the EPDCCH is transmitted. Further, control information for releasing the terminal-specific configuration information of the EPDCCH may be transmitted.

### Second embodiment, not covered by the claims

In the first embodiment, the description has been made regarding the case where the association with the antenna port of the distribution mapping is performed for the resource element. In the second embodiment, not covered by the claims, the association with the antenna port is performed for each complex symbol block. The complex symbol block may be all or some of the EPDCCHs. In addition, hereinafter, a part different from the first embodiment will be described, and the part not to be described is the same as in the first embodiment.

The association with the antenna port is performed for the complex symbol of the EPDCCH. The complex symbol is mapped to the resource element in each EREG according to the frequency priority mapping rule. The mapping to the resource element of the complex symbol is performed for the resource element to which the collision signal is not mapped. As a result, the antenna port can be associated while skipping the collision signal.

Hereinafter, a description will be made regarding the association between the resource used in the transmission of the EPDCCH and the antenna port of the EPDCCH demodulation reference signal (mapping, correspondence). As already described, the base station 100 transmits the EPDCCH and the EPDCCH demodulation reference signal associated with the EPDCCH. Further, the terminal 200 detects (demodulates) the EPDCCH by using the EPDCCH demodulation reference signal. The resource used in the transmission of the EPDCCH and the antenna port of the EPDCCH demodulation reference signal are associated by using a predetermined method. Here, the resource used in the transmission of the EPDCCH is an EPDCCH region, an EPDCCH, an EREG, an EREG set, an ECCE, or a resource element. In addition, the EPDCCH demodulation reference signal is also simply referred to as a reference signal.

Further, the association between the resource used in the transmission of the EPDCCH and the antenna port of the EPDCCH demodulation reference signal can be switched, based on the configuration of the EPDCCH. For example, the association between the resource used in the transmission of the EPDCCH and the antenna port of the EPDCCH demodulation reference signal can be different in the case of transmitting the EPDCCH by localized mapping and the case of transmitting the EPDCCH by distribution mapping. In other words, the association between the resource used in the transmission of the EPDCCH and the antenna port of the EPDCCH demodulation reference signal is determined, depending on whether the mapping rule configured in the EPDCCH region is localized mapping or distribution mapping.

When the EPDCCH is transmitted by using localized mapping, the antenna port to be associated is determined, for each EPDCCH. First, in each RB pair, each ECCE is associated with any of the antenna ports 107 to 110. For example, in each RB pair, the antenna ports 107 to 110 are associated in order from the ECCE of the smallest ECCE number. In other words, in localized mapping, each ECCE corresponds to a different antenna port. Further, when the ECCE aggregation level is two or greater, the each EPDCCH can be transmitted by using any of the antenna ports associated with the distributed resources to be mapped. In this case, the association may be determined, further based on the terminal-specific ID, the RNTI, the RB number, the RB pair number, and/or the slot number.

In addition, the terminal 200 may be notified of the antenna port of the EPDCCH demodulation reference signal for the EPDCCH candidates to be blind decoded, from the base station 100.

When the EPDCCH is transmitted by using distribution mapping, the antenna port to be associated is determined for each resource element. It is possible to use various methods for the association.

Further, the antenna port 107 is referred to as a first antenna port. The antenna port 109 is referred to as a second antenna port.

In an example of the association between the resource used in the transmission of the EPDCCH element and the antenna port of the EPDCCH demodulation reference signal, the antenna port 107 and the antenna port 109 are associated with each other, in each EREG, according to the frequency priority mapping rule.

Fig. 7 illustrates an example of the association between the resource used in the transmission of the EPDCCH element and the antenna port of the EPDCCH demodulation reference signal. Further, Fig. 7 illustrates the association between the resource element and the antenna port of the EPDCCH demodulation reference signal in the case using the EREG structure illustrated in Fig. 5 (in other words, association between the resource element and the EREG number). Further, in Fig. 7, the number shown in each resource element represents the antenna port number. In Fig. 7, 7 represents the antenna port 107, and 9 represents the antenna port 109. For example, with respect to nine resource elements constituting the EREG 0 ((0,0), (4,1), (8,2), (0,4), and (8,5) in the slot 0, and (8,0), (0,2), (4,3), and (8,4) in the slot 1), the antenna port 107 and the antenna port 109 are associated with each other, according to the frequency priority mapping rule. In other words, five resource elements ((0,0), (8,2), (8,5) in the slot 0, and (0,2), and (8,4) in the slot 1) are associated with the antenna port 107. Four resource elements ((4,1), and (0,4) in the slot 0, and (8,0), and (4,3) in the slot 1) are associated with the antenna port 109. In addition, the case where the association with the antenna port is performed from the antenna port 107 in each EREG has been described, but the association may be performed from the antenna port 109.

Thus, in each EREG, the number of resource elements associated with the antenna port 107 and the number of resource elements associated with the antenna port 109 can be almost the same. Since it is possible to reduce the deviation between antenna ports, the frequency diversity effect is improved.

In another example of the association between the resource used in the transmission of the EPDCCH element and the antenna port of the EPDCCH demodulation reference signal, the antenna port 107 and the antenna port 109 are associated with each other, in each EREG, according to the frequency priority mapping rule. Further, the association with the antenna port is performed from the antenna port 107 or the antenna port 109, in each EREG, according to the EREG number of the associated EREG. For example, the association with the antenna port is performed from the antenna port 107 or the antenna port 109, in each EREG, depending on whether the EREG number is an odd number or an even number.

In other words, in the distribution mapping, a physical resource is given as a unit of the EREG. The resource elements in a certain EREG are associated with any of two antenna ports (in other words, the antenna ports 107 and 109) in an alternating manner. If at this time, the EREG number that contains the resource element is an even number, the association is performed from the antenna port 107 in order, while if at this time, the EREG number that contains the resource element is an odd number, the association is performed from the antenna port 109 in order.

Fig. 8 illustrates an example of the association between the resource used in the transmission of the EPDCCH element and the antenna port of the EPDCCH demodulation reference signal. Further, Fig. 8 illustrates the association between the resource element and the antenna port of the EPDCCH demodulation reference signal in the case using the EREG structure illustrated in Fig. 5 (in other words, association between the resource element and the EREG number). Further, in Fig. 8, the number shown in each resource element represents the antenna port number. In Fig. 8, 7 represents the antenna port 107, and 9 represents the antenna port 109.

In the case of the EREG of an even EREG number, the association with the antenna port is performed from the antenna port 107 in each EREG. In the case of the EREG of an odd EREG number, the association with the antenna port is performed from the antenna port 109 in each EREG. Thus, in each EREG, OFDM symbol, and RB pair, the number of resource elements associated with the antenna port 107 and the number of resource elements associated with the antenna port 109 can be almost the same. Since it is possible to reduce the deviation between antenna ports, the frequency diversity effect is improved. Further, the average of the transmission power between the antenna ports is the same.

In another example of the association between the resource used in the transmission of the EPDCCH element and the antenna port of the EPDCCH demodulation reference signal, the antenna port 107 and the antenna port 109 are associated with each other, in each EREG, according to the frequency priority mapping rule. Further, the association with the antenna port is performed from the antenna port 107 or the antenna port 109 in each EREG, according to the EREG number of the associated EREG.

For example, the association with the antenna port is performed from the antenna port 107 or the antenna port 109 in each EREG, based on the quotient obtained by dividing the EREG number by a predetermined number M, (in other words, the number obtained by applying a floor function to the number obtained by dividing the EREG number by M, with 1 as a reference number).

For example, when M is 4, if the quotient obtained by dividing the EREG number by 4 is an even number, the association with the antenna port is performed from the antenna port 107, while if the quotient obtained by dividing the EREG number by 4 is an odd number, the association with the antenna port is performed from the antenna port 109. In other words, in the distribution mapping, a physical resource is given as a unit of the EREG. Each of the resource elements in a certain EREG is associated with any of two antenna ports (in other words, the antenna ports 107 and 109) in an alternating manner. If at this time, the quotient obtained by dividing the EREG number containing the resource element by 4 is an even number, the association is performed in order from the antenna port 107, while if at this time, the quotient obtained by dividing the EREG number containing the resource element by 4 (in other words, the number obtained by applying a floor function to the number obtained by dividing the EREG number by 4 with 1 as a reference number) is an odd number, the association is performed in order from the antenna port 109.

As a more specific example, in the case of the EREGs of the EREG numbers 0, 1, 2, 3, 8, 9, 10, and 11, in respective EREGs, the association with the antenna port is performed from the antenna port 107, while in the case of the EREGs of the EREG numbers 4, 5, 6, 7, 12, 13, 14, and 15, the association is performed from the antenna port 109. In other words, the association with the antenna port is performed such that the deviation in the antenna ports associated with the EREGs constituting the ECCE is the same in the ECCE. Thus, in each EREG, OFDM symbol, RB pair, and ECCE, the number of resource elements associated with the antenna port 107 and the number of resource elements associated with the antenna port 109 can be almost the same. Since it is possible to reduce the deviation between antenna ports, the frequency diversity effect is improved. Further, the average of the transmission power between the antenna ports is the same.

In addition, the above description has been made regarding the case where the antenna port 107 and the antenna port 109 are associated in an alternating manner, based on the EREG number, in the association between the resource used in the transmission of the EPDCCH element and the antenna port of the EPDCCH demodulation reference signal, but this is not limiting. For example, in the association between the resource used in the transmission of the EPDCCH element and the antenna port of the EPDCCH demodulation reference signal, the antenna port 107 and the antenna port 109 can be associated in an alternating manner, based on the RB pair number, the ECCE number, the subframe number, the slot number, the number identifying the EPDCCH region, and/or the number identifying the EPDCCH.

In addition, the above description has been made regarding the case where the antenna port 107 and the antenna port 109 are associated in an alternating manner for each EREG, in the association between the resource used in the transmission of the EPDCCH element and the antenna port of the EPDCCH demodulation reference signal, but this is not limiting. For example, the resources in which the association between the resource used in the transmission of the EPDCCH element and the antenna port of the EPDCCH demodulation reference signal is performed may be the RB pair, the ECCE, the subframe, the slot, the EPDCCH region, and/or the EPDCCH.

As a specific example, in another example of the association between the resource used in the transmission of the EPDCCH element and the antenna port of the EPDCCH demodulation reference signal, the antenna port 107 and the antenna port 109 can be associated with each other, in each EREG, based on the RB pair number, according to the frequency priority mapping rule. With respect to the association between the resource used in the transmission of the EPDCCH element and the antenna port of the EPDCCH demodulation reference signal, in the case of an even RB pair number, the association is performed from the antenna port 107 in each EREG, and in the case of an odd RB pair number, the association is performed from the antenna port 109 in each EREG.

Further, in the association with the antenna ports described above, the resource elements to which collision signals are mapped may be excluded. In other words, in the association with the antenna ports, when collision signals (overwrite signals and interrupt signals) are mapped to the resource elements in the EREG with which the antenna port 107 and the antenna port 109 are associated in an alternating manner (sequentially), the antenna port may be associated with the resource element to be associated next, while skipping the resource element. Here, the collision signal includes the cell-specific reference signal, the channel state information reference signal, the terminal-specific reference signal, the broadcast channel, the synchronization signal, and/or the PDCCH region. Thus, without depending on the collision signals, in each EREG, OFDM symbol, RB pair, and/or ECCE, the number of resource elements associated with the antenna port 107 and the number of resource elements associated with the antenna port 109 can be almost the same.

In addition, in another example, when the channel state information reference signal is mapped to the resource elements in the EREG which are associated with the antenna port in an alternating manner (sequentially), the antenna port is associated with the resource element, without skipping the resource element, and the channel state information reference signal can be overwritten in the resource element. In other words, the antenna port for the resource element to which the channel state information reference signal is mapped is punctured. Thus, when the EPDCCH region is shared by a plurality of terminals, the channel state information reference signal which is configured to be specific to the terminal can be mapped.

Further, when the collision signal is in the PDCCH region, the PDCCH region is configured from a control field indicator (CFI) transmitted from the base station 100 for the terminal. When the CFI is not configured through an RRC signaling, the terminal recognizes the PDCCH region based on the CFI transmitted through the PCFICH which is mapped to a predetermined resource element in a subframe. When the CFI is configured through the RRC signaling, the terminal recognizes the PDCCH region based on the CFI transmitted through the RRC signaling, regardless of the CFI transmitted through the PCFICH. In addition, when the CFI is not configured through the RRC signaling, the terminal may recognize the PDCCH region based on a pre-defined CFI, regardless of the CFI transmitted through the PCFICH.

In addition, it is described that whether the association with the antenna port is performed from the antenna port 107 or the antenna port 109 is determined based on the EREG number, but this is not limiting. For example, whether the association with the antenna port is performed from the antenna port 107 or the antenna port 109 may be determined based on the ECCE number, the EPDCCH number, the RB pair number, the cell ID, the RNTI, and the like. Further, for example, whether the association with the antenna port is performed from the antenna port 107 or the antenna port 109 may be configured from the base station 100.

In addition, the association with the antenna port may be fixed, regardless of the collision signal. For example, in each subframe, the resource element of the even-numbered OFDM symbol may be associated with the antenna port 107, and the resource element of the odd-numbered OFDM symbol may be associated with the antenna port 109. Further, for example, in each subframe, the resource element of the odd-numbered OFDM symbol may be associated with the antenna port 107, and the resource element of the even-numbered OFDM symbol may be associated with the antenna port 109.

Hereinafter, a description will be made regarding an example of an operation of the EPDCCH generation unit in the second embodiment. The EPDCCH generation unit generates the EPDCCH which is a control channel transmitted to the terminal and associated with the first antenna port and the second antenna port. The EPDCCH generation unit maps the EPDCCH to the resource element included in the EREG which is allocated for transmission of the EPDCCH. The EPDCCH generation unit associates the first antenna port or the second antenna port in an alternating manner with the complex symbol of the EPDCCH. The EPDCCH generation unit maps the complex symbol of the EPDCCH associated with the first antenna port or the second antenna port to the resource element included in the EREG which is allocated for transmission of the EPDCCH, by the frequency priority rule.

Further, when a signal other than the EPDCCH is mapped to the resource elements constituting the EREG, except for the resource element, the EPDCCH generation unit associates the complex symbol of the EPDCCH, which is associated with the first antenna port or the second antenna port, with a resource element.

Further, a signal other than the EPDCCH is a cell-specific reference signal, a PDCCH region, a broadcast channel, a synchronization signal, and/or a channel state information reference signal.

Further, the EPDCCH generation unit starts mapping from the first antenna port or the second antenna port, based on the EREG number identifying the EREG, and associates the antenna ports in an alternating manner with the complex symbols of the EPDCCHs of the EREG.

Further, in the EPDCCH generation unit, when the EREG number is an even number, the antenna ports are associated in an alternating manner with the complex symbols of the EPDCCHs of the EREG, starting from the first antenna port, while when the EREG number is an odd number, the antenna ports are associated in an alternating manner with the complex symbols of the EPDCCHs of the EREG, starting from the second antenna port.

Further, in the EPDCCH generation unit, when the quotient obtained by dividing the EREG number by a predetermined number is an even number, the antenna ports are associated in an alternating manner with the complex symbols of the EPDCCHs of the EREG, starting from the first antenna port, while when the quotient obtained by dividing the EREG number by a predetermined number is an odd number, the antenna ports are associated in an alternating manner with the complex symbols of the EPDCCHs of the EREG, starting from the second antenna port.

Further, the EPDCCH generation unit performs a predetermined number of cyclic shifts on the complex symbol of the EPDCCH which is mapped to the resource block pair of the EPDCCH region, for each OFDM symbol.

Further, the predetermined number of the cyclic shifts is determined based on the control information which is transmitted to the terminal through the RRC signaling.

Further, the frequency priority rule is a rule by which the first antenna port or the second antenna port is associated, from a resource element of the first OFDM symbol and the subcarrier of the lowest frequency, in order, with priority to a resource element in a frequency-increasing direction in each OFDM symbol, in the complex symbols of the EPDCCHs of each EREG.

Hereinafter, a description will be made regarding an example of an operation of the EPDCCH processing unit in the second embodiment. The EPDCCH processing unit detects the EPDCCHs which are mapped to the resource elements included in the EREG allocated for transmission of the EPDCCH and are associated with the first antenna port and second antenna port by using the channel estimation value that is estimated by the channel estimation unit. The EPDCCH processing unit detects the EPDCCH assuming that the first antenna port or the second antenna port is associated in an alternating manner with the complex symbols of the EPDCCH. The EPDCCH processing unit detects the EPDCCH assuming that the complex symbols of the EPDCCHs associated with the first antenna port or the second antenna port are mapped to the resource elements included in the EREG allocated for transmission of the EPDCCH, according to the frequency priority rule.

Further, when a signal other than the EPDCCH is mapped to the resource element constituting the EREG, the EPDCCH processing unit detects the EPDCCH assuming that the complex symbol of the EPDCCH associated with the first antenna port or second antenna port except for the resource element is associated.

Further, a signal other than the EPDCCH is a cell-specific reference signal, a PDCCH region, a broadcast channel, a synchronization signal, and/or a channel state information reference signal,

Further, the EPDCCH processing unit detects the EPDCCH assuming that the antenna ports are associated in an alternating manner with the complex symbols of the EPDCCHs of the EREG, based on the EREG number identifying the EREG, starting from the first antenna port or the second antenna port.

Further, the EPDCCH processing unit detects the EPDCCH assuming that when the EREG number is an even number, the antenna ports are associated in an alternating manner with the complex symbols of the EPDCCHs of the EREG, starting from the first antenna port, while when the EREG number is an odd number, the antenna ports are associated in an alternating manner with the complex symbols of the EPDCCHs of the EREG, starting from the second antenna port.

Further, the EPDCCH processing unit detects the EPDCCH assuming that when the quotient obtained by dividing the EREG number by a predetermined number is an even number, the antenna ports are associated in an alternating manner with the complex symbols of the EPDCCHs of the EREG, starting from the first antenna port, while when the quotient obtained by dividing the EREG number by a predetermined number is an odd number, the antenna ports are associated in an alternating manner with the complex symbols of the EPDCCHs of the EREG, starting from the second antenna port.

Further, the EPDCCH processing unit detects the EPDCCH assuming that the complex symbol of the EPDCCH mapped with the resource block pair of the EPDCCH region is subjected to a predetermined number of cyclic shifts, in each OFDM symbol.

Further, the predetermined number of the cyclic shifts is determined based on the control information which is transmitted to the terminal through the RRC signaling.

Further, the frequency priority rule is a rule by which the first antenna port or the second antenna port is associated from a resource element of the first OFDM symbol and the subcarrier of the lowest frequency, in order, with priority to a resource element in a frequency-increasing direction in each OFDM symbol, in the complex symbols of the EPDCCHs of each EREG.

In addition, in the above description, the case has been described where the EREG number is allocated to each RB pair, but this is not limiting, and can for example also be applied to the case where the EREG numbers are allocated to all of the RB pairs of the EPDCCH region. For example, if the EPDCCH region consists of four RB pairs, each RB pair consists of 16 EREGs, and thus the EPDCCH region consists of 64 EREGs. In this case, the EREG numbers are 0 to 63, and can be assigned in order from the RB pair of a lowest frequency. In other words, the EREG numbers in a first RB pair are 0 to 15, the EREG numbers in a second RB pair are 16 to 31, the EREG numbers in a third RB pair are 32 to 47, and the EREG numbers in a fourth RB pair are 48 to 63.

In addition, in each embodiment, the case of using the frequency priority mapping rule has been described, but this is not limiting. In other words, a time priority mapping rule may be used. The time priority mapping rule is a rule by which mapping objects are mapped from a resource element of the first OFDM symbol and the subcarrier of the lowest frequency, in order, with priority to a resource element in a time-delaying direction of an OFDM symbol, in a plurality of resource elements in a mapping region, and mapping is performed similarly for the subsequent subcarrier in a frequency-increasing direction. In addition, since the mapping with the time priority mapping rule can also be applied to association with the antenna port and the like, the mapping can be referred to as the association. In other words, the time priority mapping rule can be referred to as the time priority association rule. Further, the time priority mapping rule and the time priority association rule are also referred to as a time priority rule.

The terminal device of the present invention is not intended to be limited to the application to the mobile station apparatus, and can be applied to stationary electronic equipment or non-moveable type electronic equipment which is installed in indoors and outdoors, for example, AV equipment, kitchen equipment, cleaning and washing equipment, air-conditioning equipment, office equipment, vending machines, other miscellaneous equipment, and the like.

Hitherto, various embodiments have been described in detail with reference to the drawings, but the specific configuration is not limited to the embodiments, and includes design change and the like. For example, design change of reversing the order of some processes among a series of processes may be performed. Further, also the embodiment obtained by appropriately combining the technical means respectively disclosed in different embodiments is also included.

### Industrial Applicability

The present invention is suitable to be used in a wireless base station apparatus, a wireless terminal device, a wireless communication system, and a wireless communication method.

### Reference Signs List

100 BASE STATION
110 PDCCH GENERATION UNIT
120 EPDCCH GENERATION UNIT
130 PDSCH GENERATION UNIT
111, 121, 131 CODING UNIT
112, 122, 132 MODULATION UNIT
113, 123, 133 LAYER PROCESSING UNIT
114, 124, 134 PRE-CODING UNIT
141 TERMINAL-SPECIFIC REFERENCE SIGNAL MULTIPLEXING UNIT
151 MULTIPLEXING UNIT
152 TRANSMISSION SIGNAL GENERATION UNIT
153 TRANSMISSION UNIT
200 TERMINAL
201 RECEPTION UNIT
202 RECEPTION SIGNAL PROCESSING UNIT
203 DEMULTIPLEXING UNIT
204 CHANNEL ESTIMATION UNIT
210 PDCCH PROCESSING UNIT
220 EPDCCH PROCESSING UNIT
230 PDSCH PROCESSING UNIT
211, 221, 231 CHANNEL EQUALIZATION UNIT
212, 222, 232 DEMODULATION UNIT
213, 223, 233 DECODING UNIT
901 MACRO BASE STATION
902, 903 RRH
904 TERMINAL
908, 909 LINE
905, 906, 907 COVERAGE

## Claims

1. A base station apparatus (101) configured to communicate with a terminal apparatus (102), the base station apparatus (101) comprising:
a transmitter (1603) configured to transmit an EPDCCH, Enhanced Physical Downlink Control Channel, by using either a distributed transmission or a localized transmission, wherein
the EPDCCH is transmitted using one or a plurality of ECCEs, Enhanced Control Channel elements;
each of the ECCEs consists of a plurality of EREGs, Enhanced Resource Element Groups;
each of the EREGs is constituted by a plurality of resource elements in a resource block pair;
in a first case that the EPDCCH is transmitted by using the localized transmission, the EPDCCH is associated with an antenna port, the antenna port is determined from antenna ports 107 to 110 based on an ECCE number of an ECCE among the one or plurality of ECCEs; and
in a second case that the EPDCCH is transmitted by using the distributed transmission, each of the resource elements in each of the EREGs is associated with one out of two antenna ports in an alternating manner; wherein,
the two antenna ports for the distributed transmission of the EPDCCH are antenna port 107 and an antenna port 109;
a reference signal among a first group of reference signals is transmitted via the antenna port 107, the reference signal transmitted via the antenna port 107 being used for demodulating the EPDCCH transmitted by using the distributed transmission;
a reference signal among a second group of reference signals is transmitted via the antenna port 109, the reference signal transmitted via the antenna port 109 being used for demodulating the EPDCCH transmitted by using the distributed transmission;
reference signals included in the first group are mapped to a first resource element set;
reference signals included in the second group are mapped to a second resource element set;
the first resource element set is different from the second resource element set;
and the first group is a group to which a first Walsh code applies; and
the second group is a group to which a second Walsh code applies.

2. The base station apparatus (101) according to Claim 1, wherein
in the second case, the association between the each of the EREGs and the one out of two antenna ports starts with the antenna port 107 in each of the EREGs.

3. The base station apparatus (101) according to Claim 1, wherein
in the second case, the association between the each of the EREGs and the one out of two antenna ports is performed according to a frequency priority rule in each of the EREGs.

4. A terminal apparatus (102) configured to communicate with a base station apparatus (101), the terminal apparatus (102) comprising:
a receiver (1604) configured to receive an EPDCCH, Enhanced Physical Downlink Control Channel, which is transmitted by using either a distributed transmission or a localized transmission; wherein
the EPDCCH is transmitted using one or a plurality of ECCEs, Enhanced Control Channel elements;
each of the ECCEs consists of a plurality of EREGs, Enhanced Resource Element Groups;
each of the EREGs is constituted by a plurality of resource elements in a resource block pair; and
in a first case that the EPDCCH is transmitted by using the localized transmission, the EPDCCH is associated with an antenna port, the antenna port is determined from antenna ports 107 to 110 based on an ECCE number of an ECCE among the one or plurality of ECCEs; and
in a second case that the EPDCCH is transmitted by using the distributed transmission, each of the resource elements in each of the EREGs is associated with one out of two antenna ports in an alternating manner; wherein,
the two antenna ports for the distributed transmission of the EPDCCH are antenna port 107 and an antenna port 109;
a reference signal among a first group of reference signals is transmitted via the antenna port 107, the reference signal transmitted via the antenna port 107 being used for demodulating the EPDCCH transmitted by using the distributed transmission;
a reference signal among a second group of reference signals is transmitted via the antenna port 109, the reference signal transmitted via the antenna port 109 being used for demodulating the EPDCCH transmitted by using the distributed transmission;
reference signals included in the first group are mapped to a first resource element set;
reference signals included in the second group are mapped to a second resource element set;
the first resource element set is different from the second resource element set;
and the first group is a group to which a first Walsh code applies; and
the second group is a group to which a second Walsh code applies.

5. The terminal apparatus (102) according to Claim 4, wherein
in the second case, the association between the each of the EREGs and the one out of two antenna ports starts with the antenna port 107 in each of the EREGs.

6. The terminal apparatus (102) according to Claim 4, wherein
in the second case, the association between the each of the EREGs and the one out of two antenna ports is performed according to a frequency priority rule in each of the EREGs.

7. A communication method by a base station apparatus (101) configured to communicate with a terminal apparatus (102), the communication method comprising:
transmitting an EPDCCH, Enhanced Physical Downlink Control Channel, by using either a distributed transmission or a localized transmission, wherein the EPDCCH is transmitted using one or a plurality of ECCEs, Enhanced Control Channel elements;
each of the ECCEs consists of a plurality of EREGs, Enhanced Resource Element Groups;
each of the EREGs is constituted by a plurality of resource elements in a resource block pair;
in a first case that the EPDCCH is transmitted by using the localized transmission, the EPDCCH is associated with an antenna port, the antenna port is determined from antenna ports 107 to 110 based on an ECCE number of an ECCE among the one or plurality of ECCEs; and
in a second case that the EPDCCH is transmitted by using the distributed transmission, each of the resource elements in each of the EREGs is associated with one out of two antenna ports in an alternating manner; wherein,
the two antenna ports for the distributed transmission of the EPDCCH are an antenna port 107 and an antenna port 109;
a reference signal among a first group of reference signals is transmitted via the antenna port 107, the reference signal transmitted via the antenna port 107 being used for demodulating the EPDCCH transmitted by using the distributed transmission;
a reference signal among a second group of reference signals is transmitted via the antenna port 109, the reference signal transmitted via the antenna port 109 being used for demodulating the EPDCCH transmitted by using the distributed transmission;
reference signals included in the first group are mapped to a first resource element set;
reference signals included in the second group are mapped to a second resource element set;
the first resource element set is different from the second resource element set; and
the first group is a group to which a first Walsh code applies; and
the second group is a group to which a second Walsh code applies.

8. A communication method by a terminal apparatus (102) configured to communicate with a base station apparatus (101), the communication method comprising:
receiving an EPDCCH, Enhanced Physical Downlink Control Channel, which is transmitted by using either a distributed transmission or a localized transmission; wherein
the EPDCCH is transmitted using one or a plurality of ECCEs, Enhanced Control Channel elements;
each of the ECCEs consists of a plurality of EREGs, Enhanced Resource Element Groups;
each of the EREGs is constituted by a plurality of resource elements in a resource block pair; and
in a first case that the EPDCCH is transmitted by using the localized transmission, the EPDCCH is associated with an antenna port, the antenna port is determined from antenna ports 107 to 110 based on an ECCE number of an ECCE among the one or plurality of ECCEs; and
in a second case that the EPDCCH is transmitted by using the distributed transmission, each of the resource elements in each of the EREGs is associated with one out of two antenna ports in an alternating manner; wherein,
the two antenna ports for the distributed transmission of the EPDCCH are an antenna port 107 and an antenna port 109;
a reference signal among a first group of reference signals is transmitted via the antenna port 107, the reference signal transmitted via the antenna port 107 being used for demodulating the EPDCCH transmitted by using the distributed transmission;
a reference signal among a second group of reference signals is transmitted via the antenna port 109, the reference signal transmitted via the antenna port 109 being used for demodulating the EPDCCH transmitted by using the distributed transmission;
reference signals included in the first group are mapped to a first resource element set;
reference signals included in the second group are mapped to a second resource element set;
the first resource element set is different from the second resource element set; and
the first group is a group to which a first Walsh code applies; and
the second group is a group to which a second Walsh code applies.

9. The communication method according to Claim 8, wherein
in the second case, the association between the each of the EREGs and the one out of two antenna ports starts with the antenna port 107 in each of the EREGs.

10. The communication method according to Claim 8, wherein
in the second case, the association between the each of the EREGs and the one out of two antenna ports is performed according to a frequency priority rule in each of the EREGs.

## Revendications

1. Appareil de station de base (101) configuré pour communiquer avec un appareil de terminal (102), l'appareil de station de base (101) comprenant :
un émetteur (1603) configuré pour transmettre un EPDCCH, canal de commande de liaison descendante physique amélioré, en utilisant une transmission distribuée ou une transmission localisée, dans lequel le EPDCCH est transmis en utilisant un ou une pluralité de ECCE, éléments de canal de commande améliorés ;
chacun des ECCE consiste en une pluralité de EREG, groupes d'éléments de ressources améliorés ;
chacun des EREG est constitué d'une pluralité d'éléments de ressources dans une paire de blocs de ressources ;
dans un premier cas où le EPDCCH est transmis en utilisant la transmission localisée, le EPDCCH est associé à un port d'antenne, le port d'antenne est déterminé parmi les ports d'antenne 107 à 110 en fonction d'un numéro de ECCE d'un ECCE parmi le ou la pluralité de ECCE ; et
dans un second cas où le EPDCCH est transmis en utilisant la transmission distribuée, chacun des éléments de ressources dans chacun des EREG est associé à un parmi deux ports d'antenne de manière alternée ; dans lequel les deux ports d'antenne pour la transmission distribuée du EPDCCH sont le port d'antenne 107 et un port d'antenne 109 ;
un signal de référence parmi un premier groupe de signaux de référence est transmis par le biais du port d'antenne 107, le signal de référence transmis par le biais du port d'antenne 107 étant utilisé pour démoduler le EPDCCH transmis en utilisant la transmission distribuée ;
un signal de référence parmi un second groupe de signaux de référence est transmis par le biais du port d'antenne 109, le signal de référence transmis par le biais du port d'antenne 109 étant utilisé pour démoduler le EPDCCH transmis en utilisant la transmission distribuée ;
des signaux de référence inclus dans le premier groupe sont mappés à un premier ensemble d'éléments de ressources ;
des signaux de référence inclus dans le second groupe sont mappés à un second ensemble d'éléments de ressources ;
le premier ensemble d'éléments de ressources est différent du second ensemble d'éléments de ressources ; et le premier groupe est un groupe auquel un premier code Walsh s'applique ; et
le second groupe est un groupe auquel un second code Walsh s'applique.

2. Appareil de station de base (101) selon la revendication 1, dans lequel dans le second cas, l'association entre chacun des EREG et le port parmi deux ports d'antenne démarre avec le port d'antenne 107 dans chacun des EREG.

3. Appareil de station de base (101) selon la revendication 1, dans lequel dans le second cas, l'association entre chacun des EREG et le port parmi deux ports d'antenne est réalisée en fonction d'une règle de priorité de fréquence dans chacun des EREG.

4. Appareil de terminal (102) configuré pour communiquer avec un appareil de station de base (101), l'appareil de terminal (102) comprenant :
un récepteur (1604) configuré pour recevoir un EPDCCH, canal de commande de liaison descendante physique amélioré, qui est transmis en utilisant une transmission distribuée ou une transmission localisée ; dans lequel le EPDCCH est transmis en utilisant un ou une pluralité de ECCE, éléments de canal de commande améliorés ;
chacun des ECCE consiste en une pluralité de EREG, groupes d'éléments de ressources améliorés ;
chacun des EREG est constitué d'une pluralité d'éléments de ressources dans une paire de blocs de ressources ; et
dans un premier cas où le EPDCCH est transmis en utilisant la transmission localisée, le EPDCCH est associé à un port d'antenne, le port d'antenne est déterminé parmi les ports d'antenne 107 à 110 en fonction d'un numéro de ECCE d'un ECCE parmi le ou la pluralité de ECCE; et
dans un second cas où le EPDCCH est transmis en utilisant la transmission distribuée, chacun des éléments de ressources dans chacun des EREG est associé à un parmi deux ports d'antenne de manière alternée ; dans lequel les deux ports d'antenne pour la transmission distribuée du EPDCCH sont le port d'antenne 107 et un port d'antenne 109 ;
un signal de référence parmi un premier groupe de signaux de référence est transmis par le biais du port d'antenne 107, le signal de référence transmis par le biais du port d'antenne 107 étant utilisé pour démoduler le EPDCCH transmis en utilisant la transmission distribuée ;
un signal de référence parmi un second groupe de signaux de référence est transmis par le biais du port d'antenne 109, le signal de référence transmis par le biais du port d'antenne 109 étant utilisé pour démoduler le EPDCCH transmis en utilisant la transmission distribuée ;
des signaux de référence inclus dans le premier groupe sont mappés à un premier ensemble d'éléments de ressources ;
des signaux de référence inclus dans le second groupe sont mappés à un second ensemble d'éléments de ressources ;
le premier ensemble d'éléments de ressources est différent du second ensemble d'éléments de ressources ; et le premier groupe est un groupe auquel un premier code Walsh s'applique ; et
le second groupe est un groupe auquel un second code Walsh s'applique.

5. Appareil de terminal (102) selon la revendication 4, dans lequel dans le second cas, l'association entre chacun des EREG et le port parmi deux ports d'antenne démarre avec le port d'antenne 107 dans chacun des EREG.

6. Appareil de terminal (102) selon la revendication 4, dans lequel dans le second cas, l'association entre chacun des EREG et le port parmi deux ports d'antenne est réalisée en fonction d'une règle de priorité de fréquence dans chacun des EREG.

7. Procédé de communication par un appareil de station de base (101) configuré pour communiquer avec un appareil de terminal (102), le procédé de communication comprenant :
transmettre un EPDCCH, canal de commande de liaison descendante physique amélioré, en utilisant une transmission distribuée ou une transmission localisée, dans lequel le EPDCCH est transmis en utilisant un ou une pluralité de ECCE, éléments de canal de commande améliorés ;
chacun des ECCE consiste en une pluralité de EREG, groupes d'éléments de ressources améliorés ;
chacun des EREG est constitué d'une pluralité d'éléments de ressources dans une paire de blocs de ressources ;
dans un premier cas où le EPDCCH est transmis en utilisant la transmission localisée, le EPDCCH est associé à un port d'antenne, le port d'antenne est déterminé parmi les ports d'antenne 107 à 110 en fonction d'un numéro de ECCE d'un ECCE parmi le ou la pluralité de ECCE; et
dans un second cas où le EPDCCH est transmis en utilisant la transmission distribuée, chacun des éléments de ressources dans chacun des EREG est associé à un parmi deux ports d'antenne de manière alternée ; dans lequel les deux ports d'antenne pour la transmission distribuée du EPDCCH sont un port d'antenne 107 et un port d'antenne 109 ;
un signal de référence parmi un premier groupe de signaux de référence est transmis par le biais du port d'antenne 107, le signal de référence transmis par le biais du port d'antenne 107 étant utilisé pour démoduler le EPDCCH transmis en utilisant la transmission distribuée ;
un signal de référence parmi un second groupe de signaux de référence est transmis par le biais du port d'antenne 109, le signal de référence transmis par le biais du port d'antenne 109 étant utilisé pour démoduler le EPDCCH transmis en utilisant la transmission distribuée ;
des signaux de référence inclus dans le premier groupe sont mappés à un premier ensemble d'éléments de ressources ;
des signaux de référence inclus dans le second groupe sont mappés à un second ensemble d'éléments de ressources ;
le premier ensemble d'éléments de ressources est différent du second ensemble d'éléments de ressources ; et
le premier groupe est un groupe auquel un premier code Walsh s'applique ; et
le second groupe est un groupe auquel un second code Walsh s'applique.

8. Procédé de communication par un appareil de terminal (102) configuré pour communiquer avec un appareil de station de base (101), le procédé de communication comprenant :
recevoir un EPDCCH, canal de commande de liaison descendante physique amélioré, qui est transmis en utilisant une transmission distribuée ou une transmission localisée ; dans lequel
le EPDCCH est transmis en utilisant un ou une pluralité de ECCE, éléments de canal de commande améliorés ;
chacun des ECCE consiste en une pluralité de EREG, groupes d'éléments de ressources améliorés ;
chacun des EREG est constitué d'une pluralité d'éléments de ressources dans une paire de blocs de ressources ; et
dans un premier cas où le EPDCCH est transmis en utilisant la transmission localisée, le EPDCCH est associé à un port d'antenne, le port d'antenne est déterminé parmi les ports d'antenne 107 à 110 en fonction d'un numéro de ECCE d'un ECCE parmi le ou la pluralité de ECCE ; et
dans un second cas où le EPDCCH est transmis en utilisant la transmission distribuée, chacun des éléments de ressources dans chacun des EREG est associé à un parmi deux ports d'antenne de manière alternée ; dans lequel les deux ports d'antenne pour la transmission distribuée du EPDCCH sont un port d'antenne 107 et un port d'antenne 109 ;
un signal de référence parmi un premier groupe de signaux de référence est transmis par le biais du port d'antenne 107, le signal de référence transmis par le biais du port d'antenne 107 étant utilisé pour démoduler le EPDCCH transmis en utilisant la transmission distribuée ;
un signal de référence parmi un second groupe de signaux de référence est transmis par le biais du port d'antenne 109, le signal de référence transmis par le biais du port d'antenne 109 étant utilisé pour démoduler le EPDCCH transmis en utilisant la transmission distribuée ;
des signaux de référence inclus dans le premier groupe sont mappés à un premier ensemble d'éléments de ressources ;
des signaux de référence inclus dans le second groupe sont mappés à un second ensemble d'éléments de ressources ;
le premier ensemble d'éléments de ressources est différent du second ensemble d'éléments de ressources ; et
le premier groupe est un groupe auquel un premier code Walsh s'applique ; et
le second groupe est un groupe auquel un second code Walsh s'applique.

9. Procédé de communication selon la revendication 8, dans lequel dans le second cas, l'association entre chacun des EREG et le port parmi deux ports d'antenne démarre avec le port d'antenne 107 dans chacun des EREG.

10. Procédé de communication selon la revendication 8, dans lequel dans le second cas, l'association entre chacun des EREG et le port parmi deux ports d'antenne est réalisée en fonction d'une règle de priorité de fréquence dans chacun des EREG.

## Patentansprüche

1. Basisstationsvorrichtung (101), die konfiguriert ist, mit einer Endgerätvorrichtung (102) zu kommunizieren, wobei die Basisstationsvorrichtung (101) umfasst:
einen Sender (1603), der konfiguriert ist, einen EPDCCH, Enhanced Physical Downlink Control Channel, zu übertragen, und zwar unter Verwendung entweder einer verteilten Übertragung oder einer lokalisierten Übertragung, wobei der EPDCCH unter Verwendung eines oder einer Mehrzahl von ECCEs, Enhanced Control Channel-Elemente, übertragen wird;
jedes der ECCEs aus einer Mehrzahl von EREGs, Enhanced Resource Element Groups, besteht;
jede der EREGs aus einer Mehrzahl von Ressourcenelementen in einem Ressourcenblockpaar besteht;
in einem ersten Fall, dass der EPDCCH unter Verwendung der lokalisierten Übertragung übertragen wird, der EPDCCH einem Antennenanschluss zugeordnet wird, wobei der Antennenanschluss aus Antennenanschlüssen 107 bis 110 basierend auf einer ECCE-Nummer eines ECCE aus dem einen oder der Mehrzahl von ECCEs bestimmt wird; und
in einem zweiten Fall, dass der EPDCCH unter Verwendung der verteilten Übertragung übertragen wird, jedes der Ressourcenelemente in jeder der EREGs abwechselnd einem von zwei Antennenanschlüssen zugeordnet wird; wobei
die zwei Antennenschlüsse für die verteilte Übertragung des EPDCCH Antennenanschluss 107 und ein Antennenanschluss 109 sind;
ein Referenzsignal aus einer ersten Gruppe von Referenzsignalen über den Antennenanschluss 107 übertragen wird, wobei das über den Antennenanschluss 107 übertragene Referenzsignal zum Demodulieren des EPDCCH verwendet wird, der unter Verwendung der verteilten Übertragung übertragen wird;
ein Referenzsignal aus einer zweiten Gruppe von Referenzsignalen über den Antennenanschluss 109 übertragen wird, wobei das über den Antennenanschluss 109 übertragene Referenzsignal zum Demodulieren des EPDCCH verwendet wird, der unter Verwendung der verteilten Übertragung übertragen wird;
Referenzsignale, die in der ersten Gruppe enthalten sind, auf einen ersten Ressourcenelementsatz gemappt werden;
Referenzsignale, die in der zweiten Gruppe enthalten sind, auf einen zweiten Ressourcenelementsatz gemappt werden;
sich der erste Ressourcenelementsatz von dem zweiten Ressourcenelementsatz unterscheidet; und
die erste Gruppe eine Gruppe ist, für die ein erster Walsh-Code gilt; und
die zweite Gruppe eine Gruppe ist, für die ein zweiter Walsh-Code gilt.

2. Basisstationsvorrichtung (101) nach Anspruch 1, wobei
in dem zweiten Fall die Zuordnung zwischen jeder der EREGs und dem einen der zwei Antennenanschlüsse mit dem Antennenanschluss 107 in jeder der EREGs beginnt.

3. Basisstationsvorrichtung (101) nach Anspruch 1, wobei
in dem zweiten Fall die Zuordnung zwischen jeder der EREGs und dem einen der zwei Antennenanschlüsse gemäß einer Frequenzprioritätsregel in jeder der EREGs durchgeführt wird.

4. Endgerätvorrichtung (102), die konfiguriert ist, mit einer Basisstationsvorrichtung (101) zu kommunizieren, wobei die Endgerätvorrichtung (102) umfasst:
einen Empfänger (1604), der konfiguriert ist, einen EPDCCH, Enhanced Physical Downlink Control Channel, zu empfangen, der unter Verwendung entweder einer verteilten Übertragung oder einer lokalisierten Übertragung übertragen wird; wobei
der EPDCCH unter Verwendung eines oder einer Mehrzahl von ECCEs, Enhanced Control Channel-Elemente, übertragen wird;
jedes der ECCEs aus einer Mehrzahl von EREGs, Enhanced Resource Element Groups, besteht;
jede der EREGs aus einer Mehrzahl von Ressourcenelementen in einem Ressourcenblockpaar besteht;
in einem ersten Fall, dass der EPDCCH unter Verwendung der lokalisierten Übertragung übertragen wird, der EPDCCH einem Antennenanschluss zugeordnet wird, wobei der Antennenanschluss aus Antennenanschlüssen 107 bis 110 basierend auf einer ECCE-Nummer eines ECCE aus dem einen oder der Mehrzahl von ECCEs bestimmt wird; und
in einem zweiten Fall, dass der EPDCCH unter Verwendung der verteilten Übertragung übertragen wird, jedes der Ressourcenelemente in jeder der EREGs abwechselnd einem von zwei Antennenanschlüssen zugeordnet wird; wobei
die zwei Antennenschlüsse für die verteilte Übertragung des EPDCCH Antennenanschluss 107 und ein Antennenanschluss 109 sind;
ein Referenzsignal aus einer ersten Gruppe von Referenzsignalen über den Antennenanschluss 107 übertragen wird, wobei das über den Antennenanschluss 107 übertragene Referenzsignal zum Demodulieren des EPDCCH verwendet wird, der unter Verwendung der verteilten Übertragung übertragen wird;
ein Referenzsignal aus einer zweiten Gruppe von Referenzsignalen über den Antennenanschluss 109 übertragen wird, wobei das über den Antennenanschluss 109 übertragene Referenzsignal zum Demodulieren des EPDCCH verwendet wird, der unter Verwendung der verteilten Übertragung übertragen wird;
Referenzsignale, die in der ersten Gruppe enthalten sind, auf einen ersten Ressourcenelementsatz gemappt werden;
Referenzsignale, die in der zweiten Gruppe enthalten sind, auf einen zweiten Ressourcenelementsatz gemappt werden;
sich der erste Ressourcenelementsatz von dem zweiten Ressourcenelementsatz unterscheidet; und
die erste Gruppe eine Gruppe ist, für die ein erster Walsh-Code gilt; und
die zweite Gruppe eine Gruppe ist, für die ein zweiter Walsh-Code gilt.

5. Endgerätvorrichtung (102) nach Anspruch 4, wobei in dem zweiten Fall die Zuordnung zwischen jeder der EREGs und dem einen der zwei Antennenanschlüsse mit dem Antennenanschluss 107 in jeder der EREGs beginnt.

6. Endgerätvorrichtung (102) nach Anspruch 4, wobei
in dem zweiten Fall die Zuordnung zwischen jeder der EREGs und dem einen der zwei Antennenanschlüsse gemäß einer Frequenzprioritätsregel in jeder der EREGs durchgeführt wird.

7. Kommunikationsverfahren durch eine Basisstationsvorrichtung (101), die konfiguriert ist, mit einer Endgerätvorrichtung (102) zu kommunizieren, wobei das Kommunikationsverfahren umfasst:
Übertragen eines EPDCCH, Enhanced Physical Downlink Control Channel, entweder unter Verwendung einer verteilten Übertragung oder einer lokalisierten Übertragung, wobei der EPDCCH unter Verwendung eines oder einer Mehrzahl von ECCEs, Enhanced Control Channel-Elemente, übertragen wird; jedes der ECCEs aus einer Mehrzahl von EREGs, Enhanced Resource Element Groups, besteht;
jede der EREGs aus einer Mehrzahl von Ressourcenelementen in einem Ressourcenblockpaar besteht;
in einem ersten Fall, dass der EPDCCH unter Verwendung der lokalisierten Übertragung übertragen wird, der EPDCCH einem Antennenanschluss zugeordnet wird, wobei der Antennenanschluss aus Antennenanschlüssen 107 bis 110 basierend auf einer ECCE-Nummer eines ECCE aus dem einen oder der Mehrzahl von ECCEs bestimmt wird; und
in einem zweiten Fall, dass der EPDCCH unter Verwendung der verteilten Übertragung übertragen wird, jedes der Ressourcenelemente in jeder der EREGs abwechselnd einem von zwei Antennenanschlüssen zugeordnet wird; wobei
die zwei Antennenschlüsse für die verteilte Übertragung des EPDCCH Antennenanschluss 107 und ein Antennenanschluss 109 sind;
ein Referenzsignal aus einer ersten Gruppe von Referenzsignalen über den Antennenanschluss 107 übertragen wird, wobei das über den Antennenanschluss 107 übertragene Referenzsignal zum Demodulieren des EPDCCH verwendet wird, der unter Verwendung der verteilten Übertragung übertragen wird;
ein Referenzsignal aus einer zweiten Gruppe von Referenzsignalen über den Antennenanschluss 109 übertragen wird, wobei das über den Antennenanschluss 109 übertragene Referenzsignal zum Demodulieren des EPDCCH verwendet wird, der unter Verwendung der verteilten Übertragung übertragen wird;
Referenzsignale, die in der ersten Gruppe enthalten sind, auf einen ersten Ressourcenelementsatz gemappt werden;
Referenzsignale, die in der zweiten Gruppe enthalten sind, auf einen zweiten Ressourcenelementsatz gemappt werden;
sich der erste Ressourcenelementsatz von dem zweiten Ressourcenelementsatz unterscheidet; und
die erste Gruppe eine Gruppe ist, für die ein erster Walsh-Code gilt; und
die zweite Gruppe eine Gruppe ist, für die ein zweiter Walsh-Code gilt.

8. Kommunikationsverfahren durch eine Endgerätvorrichtung (102), die konfiguriert ist, mit einer Basisstationsvorrichtung (101) zu kommunizieren, wobei das Kommunikationsverfahren umfasst:
Empfangen eines EPDCCH, Enhanced Physical Downlink Control Channel, der unter Verwendung entweder einer verteilten Übertragung oder einer lokalisierten Übertragung übertragen wird; wobei
der EPDCCH unter Verwendung eines oder einer Mehrzahl von ECCEs, Enhanced Control Channel-Elemente, übertragen wird;
jedes der ECCEs aus einer Mehrzahl von EREGs, Enhanced Resource Element Groups, besteht;
jede der EREGs aus einer Mehrzahl von Ressourcenelementen in einem Ressourcenblockpaar besteht;
in einem ersten Fall, dass der EPDCCH unter Verwendung der lokalisierten Übertragung übertragen wird, der EPDCCH einem Antennenanschluss zugeordnet wird, wobei der Antennenanschluss aus Antennenanschlüssen 107 bis 110 basierend auf einer ECCE-Nummer eines ECCE aus dem einen oder der Mehrzahl von ECCEs bestimmt wird; und
in einem zweiten Fall, dass der EPDCCH unter Verwendung der verteilten Übertragung übertragen wird, jedes der Ressourcenelemente in jeder der EREGs abwechselnd einem von zwei Antennenanschlüssen zugeordnet wird; wobei
die zwei Antennenschlüsse für die verteilte Übertragung des EPDCCH Antennenanschluss 107 und ein Antennenanschluss 109 sind;
ein Referenzsignal aus einer ersten Gruppe von Referenzsignalen über den Antennenanschluss 107 übertragen wird, wobei das über den Antennenanschluss 107 übertragene Referenzsignal zum Demodulieren des EPDCCH verwendet wird, der unter Verwendung der verteilten Übertragung übertragen wird;
ein Referenzsignal aus einer zweiten Gruppe von Referenzsignalen über den Antennenanschluss 109 übertragen wird, wobei das über den Antennenanschluss 109 übertragene Referenzsignal zum Demodulieren des EPDCCH verwendet wird, der unter Verwendung der verteilten Übertragung übertragen wird;
Referenzsignale, die in der ersten Gruppe enthalten sind, auf einen ersten Ressourcenelementsatz gemappt werden;
Referenzsignale, die in der zweiten Gruppe enthalten sind, auf einen zweiten Ressourcenelementsatz gemappt werden;
sich der erste Ressourcenelementsatz von dem zweiten Ressourcenelementsatz unterscheidet; und
die erste Gruppe eine Gruppe ist, für die ein erster Walsh-Code gilt; und
die zweite Gruppe eine Gruppe ist, für die ein zweiter Walsh-Code gilt.

9. Kommunikationsverfahren nach Anspruch 8, wobei
in dem zweiten Fall die Zuordnung zwischen jeder der EREGs und dem einen der zwei Antennenanschlüsse mit dem Antennenanschluss 107 in jeder der EREGs beginnt.

10. Kommunikationsverfahren nach Anspruch 8, wobei
in dem zweiten Fall die Zuordnung zwischen jeder der EREGs und dem einen der zwei Antennenanschlüsse gemäß einer Frequenzprioritätsregel in jeder der EREGs durchgeführt wird.
